# EUROPÄISCHE PATENTANMELDUNG

(11) **EP 4 174 791 A1**
(43) Veröffentlichungstag der Anmeldung: **03.05.2023**
(21) Anmeldenummer: 21205625.3
(22) Anmeldetag: 29.10.2021
(51) Int. Cl.: G06V 10/74, G06V 10/774, G06V 10/82, G06V 10/84, G06V 40/16

(54) **VERFAHREN UND SYSTEM ZUR PERSONENVERIFIKATION IN PORTRÄTGEMÄLDEN UND COMPUTERPROGRAMMPRODUKT**

(71) Anmelder: Fraunhofer-Gesellschaft zur Förderung der angewandten Forschung e.V., 80686 München (DE)
(72) Erfinder: Terhörst, Philipp, 64293 Darmstadt (DE); Huber, Marco, 64289 Darmstadt (DE); Dr. Damer, Naser, 64293 Darmstadt (DE)
(74) Vertreter: Ramrath, Lukas

(57) **Zusammenfassung**

Die Erfindung betrifft ein Verfahren und ein System (SY) zur Personenverifikation in Porträtgemälden, wobei das Verfahren umfasst:
- Bereitstellen (S1) einer Referenzbildmenge (RM) mit Abbildern von mindestens zwei, insbesondere voneinander verschiedenen, Porträtgemälden, wobei die Porträtgemälde dieselbe Referenzperson (R1) abbilden,
- Bereitstellen (S1) einer Konträrbildmenge (KM) mit Abbildern von mindestens zwei weiteren Porträtgemälden, wobei die weiteren Porträtgemälde jeweils eine Konträrperson (K1, K2, K3) abbilden,
- Bereitstellen (S1) mindestens eines zu prüfenden Abbilds (PB) eines Porträtgemäldes, wobei das Porträtgemälde eine zu verifizierende Person (P1) abbildet,
- Bestimmen (S2) von abbildspezifischen Merkmalen (MR, MK, MP) mittels eines Verfahrens des maschinellen Lernens (ML), wobei jedem Abbild mindestens ein Merkmal zugeordnet wird,
- Bestimmen (S3) einer ersten Verteilung von Ähnlichkeiten mittels der Merkmale (MR, MK) solcher Abbilder aus der Referenz- und/oder Konträrbildmenge (RM, KM), die dieselbe Person abbilden,
- Bestimmen (S3) einer weiteren Verteilung von Ähnlichkeiten mittels der Merkmale (MR, MK) solcher Abbilder der Referenzbild- und/oder Konträrbildmenge (RM, KM), die unterschiedliche Personen abbilden,
- Bestimmen (S4) mindestens einer zur Auswertung eines Kriteriums notwendigen Größe (GK) zur Unterscheidung der Referenzperson (R1) von der oder den Konträrperson(en) (K1, K2, K3) in Abhängigkeit von der ersten und/oder weiteren Verteilung von Ähnlichkeiten,
- Bestimmen (S5) eines Ähnlichkeitsmaßes (AM) mittels der Merkmale (MP, MR) des zu prüfenden Abbilds (PB) und jedes Abbilds der Referenzbildmenge (RM),
- Verifizieren (S6), ob die zu verifizierende Person (P1) mit der Referenzperson (R1) identisch ist, wenn das Ähnlichkeitsmaß (AM) das Kriterium erfüllt,
sowie ein Computerprogrammprodukt.

## Beschreibung

Die Erfindung betrifft ein Verfahren und ein System zur Personenverifikation in Porträtgemälden sowie ein Computerprogrammprodukt.

Ein Porträt bildet üblicherweise eine Person ab, insbesondere das Gesicht bzw. den Kopf einer Person. Ein Porträt kann durch ein Gemälde oder eine Fotografie dargestellt werden. Auch bekannt sind Porträts in Form von Büsten, Skulpturen, Masken, oder Mosaiken.

Ein Porträtgemälde kann dementsprechend ein Gemälde bezeichnen, welches das Porträt einer Person in Form eines gemalten bzw. gezeichneten Gemäldes zeigt. Das Porträtgemälde weist dabei in der Regel einen Abschnitt auf, der das Gesicht bzw. den Kopf der abgebildeten Person zeigt.

Insbesondere bilden historische Porträtgemälde wichtige Personen einer Epoche ab und ermöglichen auch Rückschlüsse auf das Leben historisch wichtiger Personen. Zahlreiche Porträtgemälde sind, untern anderem aufgrund von Fortschritten in der Maltechnik, in der Zeit der Renaissance entstanden. Hierbei waren die in historischen Porträtgemälden abgebildeten Personen in der Regel so relevant, dass mehrere Porträtgemälde von einer Person angefertigt wurden. Beispielsweise wurden mehrere Porträtgemälde einer Person angefertigt, da eine Person zu unterschiedlichen Zeitpunkten ihres Lebens in Porträtgemälden abgebildet wurde. Selbstverständlich kann eine Person auch durch verschiedene Maler abgebildet worden sein. Auch vorstellbar ist, dass eine Person in mehreren Porträtgemälden aus unterschiedlichen Perspektiven abgebildet worden ist.

Für eine große Anzahl solcher historischen Porträtgemälde ist allerdings nicht überliefert, welche Person in einem Porträtgemälde abgebildet ist, insbesondere, weil diese Information im Laufe der Zeit verloren gegangen sein kann.

Traditionell wird zur Feststellung, welche Person in einem historischen Porträtgemälde abgebildet ist, eine Vermutung bezüglich der Identität der abgebildeten Person aufgestellt. Eine solche Vermutung kann insbesondere auf die Aussage eines Kunstexperten oder Kunsthistorikers gestützt sein. Beispielsweise kann der Experte bzw. Historiker zur Meinungsbildung ein Porträtgemälde nutzen, für welches die darin abgebildete Person verifiziert ist, und vergleicht dieses dann mit dem in Frage stehenden Porträtgemälde, um zu einer Aussage bezüglich der Identität der abgebildeten Person zu gelangen.

Hierbei ergibt sich allerdings nachteilig, dass eine solche Vermutung bzw. Aussage immer subjektiven Charakters ist und das Einholen von Expertenrat in der Regel mit hohem Kosten- und Zeitaufwand verbunden ist.

Es stellt sich somit das technische Problem, ein Verfahren und ein System zur Personenverifikation in Porträtgemälden sowie ein Computerprogrammprodukt zu schaffen, welches die Identität einer abgebildeten Person mit hoher Zuverlässigkeit und Genauigkeit verifiziert.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Eine grundlegende Idee der Erfindung ist es, die Identität einer Person in einem zu prüfenden Porträtgemälde zu verifizieren. Die Erfindung sieht hierzu vor, mit Hilfe von Abbildern mehrerer Porträtgemälde einer Referenzperson und Abbildern mehrerer Porträtgemälde einer oder mehrerer Konträrperson(en), die von der Referenzperson verschieden sind, unter Einsatz eines Verfahrens des maschinellen Lernens ein technisches Kriterium zu bestimmen, welches zur objektiven Unterscheidung der Referenzperson von einer Konträrperson dient. So wird ein Verfahren zur Personenverifikation ohne die zuvor genannten Nachteile ermöglicht, wobei verifiziert wird, ob die in einem zu prüfenden Porträtgemälde abgebildete Person mit der Referenzperson übereinstimmt oder nicht.

Vorgeschlagen wird daher ein Verfahren zur Personenverifikation in Porträtgemälden, umfassend:
- Bereitstellen einer Referenzbildmenge mit Abbildern von mindestens zwei, insbesondere voneinander verschiedenen, Porträtgemälden, wobei die Porträtgemälde dieselbe Referenzperson abbilden,
- Bereitstellen einer Konträrbildmenge mit Abbildern von mindestens zwei weiteren Porträtgemälden, wobei die weiteren Porträtgemälde jeweils eine Konträrperson abbilden,
- Bereitstellen mindestens eines zu prüfenden Abbilds eines Porträtgemäldes, wobei das Porträtgemälde eine zu verifizierende Person abbildet,
- Bestimmen von abbildspezifischen Merkmalen mittels eines Verfahrens des maschinellen Lernens, wobei jedem Abbild mindestens ein Merkmal zugeordnet wird,
- Bestimmen einer ersten Verteilung von Ähnlichkeiten mittels bzw. in Abhängigkeit der Merkmale solcher Abbilder aus der Referenz- und/oder Konträrbildmenge, die dieselbe Person abbilden,
- Bestimmen einer weiteren Verteilung von Ähnlichkeiten mittels bzw. in Abhängigkeit der Merkmale solcher Abbilder der Referenzbild- und/oder Konträrbildmenge, die unterschiedliche Personen abbilden,
- Bestimmen mindestens einer zur Auswertung eines Kriteriums notwendigen Größe zur Unterscheidung der Referenzperson von der oder den Konträrperson(en) in Abhängigkeit von der ersten und/oder weiteren Verteilung von Ähnlichkeiten,
- Bestimmen eines Ähnlichkeitsmaßes mittels bzw. in Abhängigkeit der Merkmale des zu prüfenden Abbilds und jedes Abbilds der Referenzbildmenge,
- Verifizieren, ob die zu verifizierende Person mit der Referenzperson identisch ist, wenn das Ähnlichkeitsmaß das Kriterium erfüllt.

Ein Abbild bezeichnet einen Bildausschnitt eines Porträtgemäldes, der vorzugsweise zumindest einen Teil des Gesichts der im Porträtgemälde abgebildeten Person zeigt. Der Bildausschnitt kann aber auch das ganze Porträtgemälde oder auch eine Umgebung des Porträtgemäldes umfassen. Das Abbild kann in Form einer Bilddatei kodiert sein, welche beispielsweise als RAW-, JPEG- oder PNG-Datei vorliegt. Insbesondere kann ein Abbild mittels einer Bilderfassungseinrichtung durch Abbilden eines Porträtgemäldes bzw. eines Abschnitts des Porträtgemäldes mittels einer Bilderfassungseinrichtung erzeugt werden.

Ein abbildspezifisches Merkmal oder abbildspezifische Merkmale können als Vektor bestimmt werden. Die in Form eines Vektors bestimmten Merkmale sind in der Regel nicht intuitiv oder direkt für einen menschlichen Nutzer interpretierbar.

Die Abbilder der Referenzbildmenge unterscheiden sich zumindest dahingehend, dass mindestens ein Abbild der Referenzbildmenge auf das erste der mindestens zwei Porträtgemälde abbildet und ein weiteres Abbild auf das zweite der mindestens zwei Porträtgemälde abbildet. Selbstverständlich kann die Referenzbildmenge mehr als zwei Abbilder umfassen, auch wenn diese Abbilder jeweils nur eines von zwei Porträtgemälden abbilden. So kann ein Porträtgemälde durch mehrere Abbilder aus beispielsweise unterschiedlichen Blickwickeln abgebildet werden und diese Abbilder können dann Teil der Referenzbildmenge sein.

Die Referenzperson ist eine, üblicherweise historisch relevante, Person, deren Identität überliefert, also vorbekannt, ist. Die Identität einer Person kann beispielsweise dadurch überliefert bzw. vorbekannt sein, dass ein Titel eines Porträtgemäldes die Identität der abgebildeten Person benennt. Alle Abbilder der Referenzbildmenge sind hierbei Abbilder von Porträtgemälden, die dieselbe Referenzperson abbilden. Von der Referenzperson existieren mindestens zwei Porträtgemälde, vorzugsweise jedoch vier oder mehr Porträtgemälde. Je mehr Porträtgemälde der Referenzperson die Referenzbildmenge umfasst, desto besser ist die Zuverlässigkeit des vorgeschlagenen Verfahrens. Dadurch, dass mindestens zwei Abbilder von den mindestens zwei voneinander verschiedenen Porträtgemälden der Referenzperson bereitgestellt werden, können verschiedene Eigenschaften, wie beispielsweise unterschiedliche Perspektiven der Abbildung der Referenzperson durch ein Porträtgemälde berücksichtigt werden, so dass die Größe zur Auswertung eines Kriteriums zur Unterscheidung der Referenzperson von der Konträrperson mit höherer Genauigkeit bestimmt werden kann. Auch kann eine negative Beeinflussung der Zuverlässigkeit des vorgeschlagenen Verfahrens durch Ungenauigkeiten, die z.B. beim Malen des Porträts entstanden sind (z.B. das Malen mit nicht korrekten Dimensionen oder Proportionen und/oder mit Verzerrungen), in vorteilhafter Weise reduziert werden.

Eine Konträrperson ist eine weitere, üblicherweise ebenfalls historisch relevante, Person, deren Identität überliefert bzw. vorbekannt ist. Die Konträrbildmenge umfasst hierbei mindestens zwei verschiedene Abbilder von Porträtgemälden derselben Konträrperson, vorzugweise von mehreren unterschiedlichen Konträrpersonen. Unterschiedliche Konträrpersonen sind Personen, deren Identität voneinander verschieden ist. Wichtig ist hierbei weiter, dass die Konträrperson(en) von der Referenzperson verschieden ist/sind, d.h. dass es sich bei der Referenz- und der/den Konträrperson(en) um verschiedene Personen bzw. Identitäten handelt. Von jeder Konträrperson existieren mindestens zwei Porträtgemälde, vorzugsweise jedoch drei oder mehr Porträtgemälde, insbesondere 3 bis 5 Porträtgemälde. Auch können für verschiedene Konträrpersonen voneinander verschiedenen Anzahlen von Porträtgemälden existieren. So können für eine Konträrperson z.B. 100 oder mehr Porträtgemälde existieren, wobei für eine weitere Konträrperson weniger Porträtgemälde existieren. Weiter vorzugsweise umfasst die Konträrbildmenge Abbilder von mindestens zwei verschiedenen Konträrpersonen.

Das zu prüfende Abbild bezieht sich auf ein Porträtgemälde, welches eine Person abbildet, deren Identität nicht überliefert, also unbekannt, ist. Eine solche Person kann ebenfalls eine historisch relevante Person sein. Ziel des hier beschriebenen Verfahrens ist es, zu verifizieren, ob diese unbekannte Person mit der Referenzperson übereinstimmt oder nicht.

Vorzugweise werden die Porträtgemälde bzw. Abbilder der Konträrbildmenge so gewählt, dass sie den Porträtgemälden der Referenzbildmenge bezüglich des verwendeten Malstils bzw. der verwendeten Maltechnik ähneln. Beispielsweise, indem die Porträtgemälde von demselben Maler oder in der gleichen oder einer ähnlichen Epoche angefertigt wurden. Auch kann das Geschlecht, Alter oder eine andere personenspezifische Eigenschaften der Referenzperson bei der Wahl der Porträtgemälde bzw. Abbilder der Konträrbildmenge berücksichtigt werden. Insbesondere kann ein Auswahlkriterium bei der Bereitstellung der Referenz- und/oder Konträrbildmenge festgelegt werden, wie beispielsweise nur weibliche oder nur männliche Personen, oder nur Porträtgemälde eines bestimmten Malers. Auch kann ein Wertebereich festgelegt werden, der eine Spanne des Alters der abgebildeten Personen betrifft, wie beispielsweise nur Abbilder von Personen, die zum Zeitpunkt der Anfertigung eines Porträtgemäldes zwischen 30 und 40 Jahren alt waren. So können Unterschiede zwischen den Porträtgemälden so gut wie möglich auf die abgebildeten, unterschiedlichen Personen zurückgeführt werden und hängen nicht allein von unterschiedlichen Malstilen oder z.B. vom Geschlecht oder Alter der abgebildeten Personen o.ä. ab.

Weiter vorzugweise werden alle Porträtgemälde der Referenz- und Konträrbildmenge so gewählt, dass sie dem Porträtgemälde des zu prüfenden Abbilds bezüglich der zuvor genannten Wahlkriterien ebenfalls ähneln. Auch können Vermutungen bezüglich der Identität der zu verifizierenden Person die Auswahl der Porträtgemälde der Referenz- bzw. der Konträrbildmenge beeinflussen.

Das Bereitstellen aller Abbilder, bzw. der beiden beschriebenen Bildmengen und des zu prüfenden Abbilds, kann durch Einlesen über eine Schnittstelle und/oder durch Abrufen aus einer Datenbank erfolgen. Die Abbilder können insbesondere zur Durchführung des Verfahrens in einer Speichereinrichtung, wie zum Beispiel in einer als ROM oder RAM ausgebildeten Speichereinrichtung oder einen ROM oder RAM umfassenden Speichereinrichtung, gespeichert werden. Dies ist im Folgenden noch näher beschrieben. Auch denkbar ist, dass die Abbilder auf unterschiedliche Arten bereitgestellt werden, d.h. dass beispielsweise ein Abbild durch Einlesen über eine Schnittstelle und ein anderes Abbild durch Abrufen aus einer Datenbank bereitgestellt werden kann.

Ein abbildspezifisches Merkmal kann eine oder mehrere Eigenschaften eines Abbilds repräsentieren, die objektiv und technisch analysierbar sind. So kann es sich bei einer solchen Eigenschaft um eine geometrische Eigenschaft bezüglich eines menschlichen Gesichts handeln, wie beispielsweise den Abstand, die Form oder die Anordnung der Augen, der Nase, und/oder des Munds einer Person. Weiter kann es sich auch um eine Eigenschaft handeln, die einen künstlerischen Aspekt bezüglich eines verwendeten Malstils bzw. einer verwendeten Maltechnik betrifft. So kann beispielsweise die Dicke eines Pinselstrichs im Abbild das Bestimmen eines abbildspezifischen Merkmals beeinflussen. Die Dicke eines solchen Pinselstrichs oder beispielsweise der Abstand zwischen den Augen einer Person können insbesondere in einem Abbild über eine Anzahl von Bildpunkten bzw. die Entfernung von Bildpunkten zueinander o.ä. quantifiziert werden. Allerdings kann ein abbildspezifisches Merkmal auch eine Eigenschaft sein, die nicht unmittelbar im Abbild erkennbar ist. Insbesondere kann das Verfahren des maschinellen Lernens dafür trainiert sein, die beschriebenen Eigenschaften beim Bestimmen eines abbildspezifischen Merkmals zu berücksichtigen. Dies, insbesondere das Trainieren eines neuronalen Netzes, wird im Folgenden noch näher erläutert.

Alle Abbilder der Referenz- und Konträrbildmenge werden hierbei durch das Verfahren des maschinellen Lernens analysiert. Ebenfalls wird das zu prüfende Abbild durch das Verfahren des maschinellen Lernens analysiert. Für jedes Abbild wird mittels des Verfahrens des maschinellen Lernens so mindestens ein abbildspezifisches Merkmal automatisiert bestimmt und dem jeweiligen Abbild zugeordnet.

Das Verfahren des maschinellen Lernens ist hierbei vorzugweise derart trainiert, dass die abbildspezifischen Merkmale für die Abbilder ähnlich sind, die dieselbe Person abbilden. Weiter sind die abbildspezifischen Merkmale für die Abbilder unähnlich, die unterschiedliche Personen abbilden. Dies liegt insbesondere darin begründet, dass den Abbildern, die dieselbe Person abbilden, ähnliche, insbesondere personenspezifische, Eigenschaften zugrunde liegen.

Eine Ähnlichkeit von Merkmalen hängt vorzugweise von einem Abstand zwischen Merkmalen ab bzw. kann durch diesen repräsentiert sein, beispielsweise, wenn die bestimmten Merkmale als Vektoren bestimmt wurden. So können einerseits die Vektoren für Abbilder, die dieselbe Person abbilden, räumlich nah beieinander angeordnet sein, sich also ähnlich sein, während andererseits die Vektoren für Abbilder, die unterschiedliche Personen abbilden, räumlich weit voneinander entfernt im Vektorraum angeordnet sein können.

Mit anderen Worten ergeben sich stärkere Ähnlichkeiten zwischen den Merkmalen von Abbildern, die dieselbe Person abbilden, und schwächere Ähnlichkeiten zwischen Merkmalen von Abbildern, die unterschiedliche Personen abbilden. Vorzugweise wird eine bestimmte Ähnlichkeit zwischen zwei Merkmalen als Ähnlichkeitswert bezeichnet.

Ein solcher Ähnlichkeitswert kann beispielsweise aus dem Kehrwert der euklidischen Distanz zwischen zwei Vektoren bzw. Merkmalen bestimmt werden. Eine schwache bzw. niedrige Ähnlichkeit kann hierbei einem kleinen Ähnlichkeitswert entsprechen, während eine starke bzw. hohe Ähnlichkeit dann einem großen Ähnlichkeitswert entspräche. So führen größere Differenzen zu kleineren Ähnlichkeitswerten, was mit dem erläuterten Verständnis von einer stärkeren und schwächeren Ähnlichkeit in Einklang steht. Auch möglich ist, dass der Ähnlichkeitswert über eine Kosinus-Ähnlichkeit zweier Vektoren bzw. Merkmale bestimmt wird. Dabei wird der Ähnlichkeitswert über den Kosinus des Winkels zwischen zwei Vektoren bestimmt, wobei der kleinere bzw. spitze Winkel von zwei kongruenten Schnittwinkeln als Winkel zur Bestimmung des Kosinus genutzt wird. Der Kosinus eines Winkels von Null ist eins, während der Kosinus eines Winkels von pi/2 null ist. So führt ein kleiner Winkel zu einem großen Kosinuswert und somit zu einem größeren Ähnlichkeitswert, während ein größerer Winkel zu einem kleineren Kosinuswert und somit zu einem kleineren Ähnlichkeitswert führt. Insbesondere kann der Ähnlichkeitswert dem Kosinus entsprechen.

Die bestimmten Ähnlichkeitswerte werden zur Bestimmung der ersten und weiteren Verteilung genutzt.

So wird die erste Verteilung insbesondere aus solchen Ähnlichkeitswerten bestimmt, die sich aus der Differenz zwischen Merkmalen von Abbildern ergeben, die dieselbe Person abbilden, also beispielsweise aus der Differenz eines Merkmals eines Abbilds der Referenzbildmenge mit einem Merkmal eines anderen Abbilds der Referenzbildmenge. Weiter können auch Ähnlichkeitswerte genutzt werden, die sich aus der Differenz zwischen Merkmalen von Abbildern der Konträrbildmenge ergeben, die dieselbe Konträrperson abbilden. Mit anderen Worten kann die erste Verteilung auch als eine erste Wertemenge bezeichnet werden, die die erläuterten Ähnlichkeitswerte umfasst.

Die weitere Verteilung wird dann insbesondere aus solchen Ähnlichkeitswerten bestimmt, die sich aus der Differenz zwischen Merkmalen von Abbildern ergeben, die unterschiedliche Personen abbilden, also beispielsweise aus der Differenz eines Merkmals eines Abbilds der Referenzbildmenge zu einem Abbild der Konträrbildmenge. Auch möglich ist, dass Ähnlichkeitswerte genutzt werden, die sich aus der Differenz zwischen Merkmalen von Abbildern verschiedener Konträrpersonen ergeben. Mit anderen Worten kann die zweite Verteilung auch als zweite Wertemenge bezeichnet werden, die die erläuterten Ähnlichkeitswerte umfasst.

Die erste Verteilung von Ähnlichkeiten wird auch als Übereinstimmungsverteilung oder Genuine-Verteilung und die weitere Verteilung von Ähnlichkeiten als Nicht-Übereinstimmungsverteilung oder Imposter-Verteilung bezeichnet.

Wurden beispielsweise aus, insbesondere paarweisen, Abgleichen zwischen Merkmalen von Abbildern, die dieselbe Person abbilden, vier Ähnlichkeitswerte mit den Werten (4, 5, 5, 6) bestimmt, so kann die erste Verteilung die Wertemenge (4, 5, 5, 6) sein.

Wurden weiter aus, insbesondere paarweisen, Abgleichen zwischen Merkmalen von Abbildern, die unterschiedliche Personen abbilden, vier Ähnlichkeitswerte mit den Werten (2, 3, 3, 4) bestimmt, so kann die weitere Verteilung die Wertemenge (2, 3, 3, 4) sein.

Die Größe zur Auswertung eines Kriteriums zur Unterscheidung der Referenzperson von der oder den Konträrperson(en) wird in Abhängigkeit von der ersten und/oder der weiteren Verteilung bestimmt. Die bestimmte Größe kann insbesondere als ein Schwellwert bei der Auswertung des Kriteriums genutzt werden.

Vorzugsweise wird die Größe aus einem Wertebereich der Ähnlichkeitswerte der ersten und/oder der weiteren Verteilung bestimmt. Insbesondere kann der Wertebereich eine Schnittmenge oder einen Überscheidungsbereich der ersten und weiteren Verteilung betreffen, wobei die Größe z.B. als Mittelwert, Minimalwert oder Maximalwert dieser Schnittmenge/dieses Bereichs bestimmt wird. Im oben erwähnten Beispiel für die erste und weitere Verteilung könnte die bestimmte Größe z.B. als der Ähnlichkeitswert von 4 bestimmt werden. Existiert allerdings keine Schnittmenge bzw. Überscheidungsbereich, so kann die Größe auch als der insbesondere niedrigste Ähnlichkeitswert der ersten Verteilung bestimmt werden. Auch vorstellbar ist, dass die Größe als der Mittelwert der ersten Verteilung bestimmt wird. In Analogie zum oben erwähnten Beispiel könnte die Größe also als der Ähnlichkeitswert von 5 bestimmt werden. Wesentlich ist, dass es die bestimmte Größe ermöglicht, ein Kriterium auszuwerten, wobei das Ergebnis der Auswertung es ermöglicht, die in einem zu prüfenden Abbild abgebildete Person von der Referenz- bzw. der oder den Konträrperson(en) zu unterscheiden.

Insbesondere wird die Größe derart bestimmt, dass eine vorbestimmte Falschakzeptanzrate, z.B. eine Falschakzeptanzrate von 0.001, nicht überschritten wird, also nicht mehr als ein bestimmter Prozentsatz von tatsächlich nicht mit der entsprechenden Referenzperson identischen zu verifizierenden Personen gemäß dem Verfahren als mit der Referenzperson identisch verifiziert wird. Zur Bestimmung der Größe können beispielsweise solche Bildpaare der Konträrbildmenge genutzt werden, die nicht dieselbe Person abbilden, wobei ein Ähnlichkeitswert für jedes Bildpaar bestimmt wird und die Größe dann derart gewählt wird, dass unter Verwendung der Größe nur maximal ein solcher Prozentsatz von tatsächlich nicht-übereinstimmenden Bildpaaren als übereinstimmend bestimmt wird, der geringer als die oder gleich der vorbestimmte(n) Falschakzeptanzrate ist. Auch kann die Größe derart bestimmt werden, dass eine vorläufige Größe als Startwert für eine Iteration gewählt wird, wie beispielsweise ein Wert aus der Schnittmenge der ersten und weiteren Verteilung, und die Größe durch Iteration so bestimmt wird, dass die vorbestimmte Falschakzeptanzrate nicht überschritten wird.

Das Kriterium kann z.B. ausgewertet werden, indem die bestimmte Größe mit dem Ähnlichkeitsmaß verglichen wird.

Das Ähnlichkeitsmaß ergibt sich aus einem Abgleich der Merkmale des zu prüfenden Abbilds mit jedem Abbild der Referenzbildmenge. So kann beispielsweise für jedes Abbildpaar, umfassend das zu prüfende Abbild und ein Abbild der Referenzbildmenge, ein Ähnlichkeitswert bestimmt werden, wobei das Ähnlichkeitsmaß dann z.B. als ein Minimalwert, Mittelwert oder Maximalwert der Vielzahl von Ähnlichkeitswerten bestimmt wird. Mit anderen Worten gibt das bestimmte Ähnlichkeitsmaß an, wie ähnlich sich die zu verifizierende Person und die Referenzperson sind. In Analogie zu dem oben angeführten Beispiel könnte das Ähnlichkeitsmaß als ein gemittelter Ähnlichkeitswert von 5 bestimmt werden. Aber auch eine andere Art der Bestimmung des Ähnlichkeitsmaßes ist möglich.

Eine Übereinstimmung von der zu verifizierenden Person und der Referenzpersonen kann sich dann ergeben, wenn das bestimmte Ähnlichkeitsmaß größer als die zuvor bestimmte Größe ist. Die bestimmte Größe stellt in dem hier gewählten Beispiel also einen Schwellwert eines Schwellwert-Kriteriums dar, der für die Verifikation durch das Ähnlichkeitsmaß beispielsweise überschritten werden muss. Insbesondere wird das Kriterium hierdurch technisch, da der notwendigen Größe zur Auswertung des Kriteriums solche Eigenschaften der Abbilder zugrunde liegen, die objektiv und technisch bestimmbar sind.

Bezugnehmend auf das oben angeführte Beispiel wäre das Ergebnis der Verifikation somit, dass die zu verifizierende Person mit der Referenzperson übereinstimmt, da das Ähnlichkeitsmaß, hier 5, größer als die bestimmte Größe bzw. der Schwellwert, hier 4, ist und somit das Kriterium erfüllt ist. Erfüllt das Ähnlichkeitsmaß das Kriterium hingegen nicht, beispielsweise weil das Ähnlichkeitsmaß als ein gemittelter Ähnlichkeitswert von 3 bestimmt worden ist, so wäre das Ergebnis der Verifikation, dass die zu verifizierende Person nicht mit der Referenzperson übereinstimmt.

Durch das hier beschriebene Verfahren wird eine Personenverifikation in Porträtgemälden ermöglicht, die auf objektiven und technisch bestimmbaren Eigenschaften von Porträtgemälden gestützt ist und die insbesondere nicht nur auf die fehleranfällige Meinung eines Menschen zurückgeführt wird. Durch die beschriebene automatisierte Merkmalszuordnung bezüglich der Abbilder einer Referenzperson und der Abbilder einer oder mehrerer Konträrpersonen, sowie durch die sich daraus ergebenden Verteilungen kann in vorteilhafter Weise eine hohe Zuverlässigkeit sowie eine hohe Genauigkeit bei der Personenverifikation erreicht werden, die insbesondere auch schnell und kostengünstig durchgeführt werden kann.

In einer weiteren Ausführungsform erfolgt das Bereitstellen der Abbilder durch Einlesen über eine Schnittstelle oder aus einer Datenbank und/oder durch Erfassen der Porträtgemälde mittels einer Bilderfassungseinrichtung.

Das Einlesen bezeichnet das Übertragen der zuvor beschriebenen Abbilder von einer elektronischen Einrichtung zu einer anderen elektronischen Einrichtung, wie beispielsweise von einem Server auf ein System, welches zur Personenverifikation nach einer in dieser Offenbarung beschriebenen Ausführungsform ausgebildet ist. Ein solches System kann beispielsweise ein Mobiltelefon oder ein Computer sein oder ein(en) solche(n) umfassen. Ein Server kann systemfremd sein und eine Datenbank ausbilden oder umfassen, wobei in der Datenbank Abbilder, insbesondere Bilddateien, verschiedener Porträtgemälde gespeichert sind und für zumindest einen Teil der Abbilder die darin abgebildete Person vorbekannt ist und die entsprechende Identitätsinformation dem Abbild zugeordnet ist. Einem Abbild können selbstverständlich weiter auch Informationen über einen Maler/Malerin, eine Epoche, einen Malstil, etc. oder ein Geschlecht oder Alter der abgebildeten Person zugeordnet sein. Das Bereitstellen der Abbilder kann dann über ein Übertragen der Abbilder und der den Abbildern zugeordneten Informationen aus der Datenbank auf eine Speichereinrichtung des Systems erfolgen. Insbesondere können die Abbilder auf einer Speichereinrichtung des Systems abgespeichert werden oder zwischengespeichert werden, bis das Verfahren zur Personenverifikation abgeschlossen ist.

Auch das Einlesen der Abbilder über eine Schnittstelle ist möglich. Die Schnittstelle ermöglicht eine datentechnische Übertragung zwischen zwei elektronischen Einrichtungen, wie beispielsweise zwischen einer systemfremden Speichereinrichtung und dem zuvor genannten System.

Insbesondere kann das Einlesen bzw. Übertragen der Abbilder über die Schnittstelle und/oder aus der Datenbank mit Hilfe verschiedener Verbindungsstandards wie beispielsweise USB, Bluetooth, WLAN, Wi-Fi etc. ermöglicht sein.

Auch können die Abbilder oder ein Teil der Abbilder durch das Erfassen eines Porträtgemäldes mit einer Bilderfassungseinrichtung bereitgestellt werden. Eine solche Bilderfassungseinrichtung kann insbesondere Teil des Systems zur Personenverifikation sein, wie beispielsweise eine Mobiltelefonkamera. Die Bilderfassungseinrichtung kann einen oder mehrere Bildsensoren aufweisen, wie beispielsweise CCD- oder CMOS-Sensoren. Ein Bildsensor erfasst ein oder mehrere Abbilder eines Porträtgemäldes aufgrund von Lichtstrahlen, die von dem Porträtgemälde oder einem Teil des Porträtgemäldes auf den Bildsensor treffen. Ein so generiertes Abbild eines Porträtgemäldes ist vorzugweise in Form einer zuvor beschriebenen Bilddatei kodiert.

Durch die beschriebenen Arten des Bereitstellens der Abbilder ist sichergestellt, dass die zur Durchführung des Verfahrens notwendigen Abbilder und Informationen einem System zur Personenverifikation in zuverlässiger Weise zur Verfügung gestellt werden können. Ein solches System ist im Folgenden noch näher beschrieben.

In einer weiteren Ausführungsform werden die abbildspezifischen Merkmale als Vektoren in einem Vektorraum bestimmt, wobei die erste und/oder weitere Verteilung und/oder das Ähnlichkeitsmaß ausgehend von bestimmten Unterschieden zwischen den Vektoren bestimmt werden.

Durch ein als Vektor bestimmtes Merkmal werden die eingangs erläuterten Eigenschaften eines Abbilds durch Einträge in dem Vektor repräsentiert. Diese Einträge können hierbei numerische Werte sein. Ein Eintrag kann eine Komponente bzw. ein Element eines Vektors sein, wobei die Anzahl der Komponenten /Elementen eines Vektors die Dimension des Vektorraums vorgibt. Der Vektorraum kann somit ein mehrdimensionaler mathematischer Raum sein, wobei vorzugsweise alle bestimmten Merkmale im selben Vektorraum angeordnet sind.

Die Unterschiede zwischen den Vektoren können beispielsweise Differenzen zwischen Vektoren sein. Eine solche Differenz kann die euklidische Distanz zwischen zwei Vektoren sein. Wie sich aus den Unterschieden zwischen den Vektoren bzw. aus den betragsmäßigen Differenzen der Vektoren die erste bzw. weitere Verteilung und/oder das Ähnlichkeitsmaß bestimmen lassen, wurde weiter oben bereits beschrieben.

Eine technische Analyse eines Abbilds mittels des Verfahrens des maschinellen Lernens hat zum Vorteil, dass ein als Vektor bestimmtes Merkmal eine Eigenschaft bzw. Eigenschaften eines Abbilds, wie beispielsweise einen Augenabstand nicht unmittelbar angibt/angeben, sondern dass der Vektor durch das Verfahren des maschinellen Lernens eine solche oder andere Eigenschaft in einer abstrahierten bzw. abstrakten Form repräsentieren kann. Durch diese Art der Repräsentanz von Eigenschaften eines Abbilds in einem Vektor ergibt sich durch einen Vergleich von Vektoren bzw. Merkmalen eine objektive Vergleichbarkeit verschiedener Abbilder.

Werden die abbildspezifischen Merkmale als Vektoren in einem Vektorraum bestimmt, ergibt sich in vorteilhafter Weise ein einfacher und objektiver Vergleich zwischen den Eigenschaften verschiedener Abbilder. Die Objektivität des Vergleichs ergibt sich insbesondere aus dem Normieren der Vektoren.

In einer weiteren Ausführungsform wird als Größe zur Auswertung des Kriteriums ein Wert aus einem Wertebereich der ersten und/oder weiteren Verteilung bestimmt.

Ist die Größe zur Auswertung ein, insbesondere numerischer, Wert aus einem Wertebereich der ersten und/oder weiteren Verteilung, so kann das Kriterium, wie beispielsweise das eingangs erwähnte Schwellwert-Kriterium schnell und zuverlässig ausgewertet werden.

Ein solcher Wert kann also ein Schwellwert sein, ab welchem von Übereinstimmung der in den miteinander verglichenen Abbildern abgebildeten Person ausgegangen werden kann, wie beispielsweise der Mittelwert der Ähnlichkeitswerte in einem Überschneidungsbereich der ersten und der weiteren Verteilung. Das für die Personenverifikation zu bestimmende Ähnlichkeitsmaß kann dann ebenfalls als Wert aus dem Wertebereich der Ähnlichkeitswerte der ersten und/oder weiteren Ähnlichkeitsverteilung bestimmt werden, so dass eine einfache und schnelle Auswertung des Kriteriums ermöglicht ist.

In einer weiteren Ausführungsform wird aus der ersten Verteilung eine erste Wahrscheinlichkeitsverteilung und aus der weiteren Verteilung eine weitere Wahrscheinlichkeitsverteilung erzeugt.

Beim Abgleich von Merkmalen zwischen Abbildern derselben Person, beispielsweise der Referenzperson, kann es vorkommen, dass ein Ähnlichkeitswert oder Ähnlichkeitswerte aus vorbestimmten Ähnlichkeitswertebereichen mehrfach bestimmt wird, beispielsweise, weil sich die zugrundeliegenden geometrischen Eigenschaften wie der Augenabstand in den Abbildern der Referenzperson und somit die Abbilder gleichen. So kann sich eine entsprechende Häufigkeit eines Ähnlichkeitswerts beim Bestimmen von Ähnlichkeitswerten ergeben. Auch für Abgleiche von Merkmalen zwischen Abbildern verschiedener Personen, beispielsweise zwischen der Referenzperson und der Konträrperson, kann es vorkommen, dass ein Ähnlichkeitswert mehrfach bestimmt wird. Dies kann insbesondere der Fall sein, wenn gleiche Unterschiede zwischen den Merkmalen der Abbilder der Referenz- und Konträrperson vorhanden sind, wie beispielsweise Unterschiede im bestimmten Augenabstand. So können sich Ähnlichkeitswerte der ersten und weiteren Verteilung häufen, insbesondere lässt sich für die erste und weitere Verteilung ein Histogramm der Häufigkeiten ableiten.

Vorzugweise umfassen die Referenz- und/oder Konträrbildmenge Abbilder von einer Vielzahl von verschiedenen Porträtgemälden, beispielsweise jeweils Abbilder von zwischen 10 und 100 verschiedenen Porträtgemälden, so dass sich bei entsprechender Anzahl von Abbildern auch eine entsprechend hohe Anzahl von Merkmalen ergibt. Dabei kann es insbesondere sein, dass sich entsprechende Ähnlichkeitswerte der ersten und weiteren Verteilung derart häufen, dass aus den Häufigkeiten der bestimmten Ähnlichkeitswerte ein annähernd normalverteiltes Histogramm für die erste und/oder die weitere Verteilung ergibt. Allerdings ist es auch möglich, dass das Histogramm keine Normalverteilung bzw. deren Eigenschaften aufweist.

Aus einem Histogramm lässt sich eine Wahrscheinlichkeitsverteilung erzeugen. Alternativ kann mit einem so genannten Kerndichteschätzungsverfahren eine insbesondere kontinuierliche Wahrscheinlichkeitsverteilung aus den Ähnlichkeitswerten erzeugt werden. Diese sind in der Regel nicht normalverteilt.

Da die erste Verteilung aus Abgleichen der Merkmale von Abbildern, die dieselbe Person zeigen, bestimmt wird, ordnet die erste Wahrscheinlichkeitsverteilung einem jeweiligen Ähnlichkeitswert eine Wahrscheinlichkeit für ein Übereinstimmen der abgeglichenen Merkmale zu. Ein Übereinstimmen der abgeglichenen Merkmale bezeichnet, dass die Abbilder bezüglich dieser abgeglichenen Merkmale dieselbe Person zeigen.

Da die weitere Verteilung aus Abgleichen der Merkmale von Abbildern, die unterschiedliche Personen zeigen, bestimmt wird, ordnet die weitere Wahrscheinlichkeitsverteilung einem bestimmten Ähnlichkeitswert eine sich daraus ergebende Wahrscheinlichkeit für ein Nicht-Übereinstimmen der abgeglichenen Merkmale zu. Ein Nicht-Übereinstimmen der abgeglichenen Merkmale bezeichnet, dass die Abbilder bezüglich dieser abgeglichenen Merkmale unterschiedliche Personen zeigen.

Bezugnehmend auf das eingangs erwähnte Beispiel könnte im Falle einer normalverteilten Wahrscheinlichkeitsverteilung die höchste Wahrscheinlichkeit (Häufigkeit) für ein Übereinstimmen der abgeglichen Merkmale bei einem Ähnlichkeitswert von 5 liegen, beispielsweise weil ein Ähnlichkeitswert von 5 dem Erwartungswert der ersten Wahrscheinlichkeitsverteilung entspricht. Die höchste Wahrscheinlichkeit (Häufigkeit) für ein Nicht-Übereinstimmen der abgeglichenen Merkmale könnte dementsprechend bei einem Ähnlichkeitswert von 3 liegen. Den verbleibenden Ähnlichkeitswerten der ersten und weiteren Wahrscheinlichkeitsverteilung könnten dann jeweils entsprechend niedrigere Wahrscheinlichkeiten für ein Übereinstimmen bzw. Nicht-Übereinstimmen zugeordnet werden.

Ist durch einen Abgleich von zwei Merkmalen ein Ähnlichkeitswert von 5 bestimmt worden, so kann in Abhängigkeit der ersten und weiteren Wahrscheinlichkeitsverteilung dem Ähnlichkeitswert von 5 eine Wahrscheinlichkeit von beispielsweise 80% für ein Übereinstimmen zugeordnet werden. Aufgrund von einer Überschneidung der ersten und weiteren Wahrscheinlichkeitsverteilung kann dem Ähnlichkeitswert von 5 weiter beispielsweise eine Wahrscheinlichkeit von 20% für ein Nicht-Übereinstimmen zugeordnet werden. Einem Ähnlichkeitswert von 3 kann in Abhängigkeit der ersten und weiteren Wahrscheinlichkeitsverteilung beispielsweise eine Wahrscheinlichkeit von 60% für ein Nicht-Übereinstimmen und eine Wahrscheinlichkeit von 40% für ein Übereinstimmen zugeordnet werden.

Durch Erzeugen einer ersten und weiteren Wahrscheinlichkeitsverteilung kann die Verifikation in vorteilhafter Weise durch dem Fachmann bekannte stochastische Analysemethoden ergänzt werden. Weiter wird es durch die erste und weitere Wahrscheinlichkeitsverteilung auch ermöglicht, eine Wahrscheinlichkeit für die Richtigkeit des Ergebnisses der Verifikation anzugeben. Dies wird nachfolgend noch näher erläutert.

In einer weiteren Ausführungsform wird bei der Bestimmung des Ähnlichkeitsmaßes mindestens ein Plausibilitätswert bestimmt, wobei der Plausibilitätswert als ein Verhältnis zwischen der einem (Ähnlichkeits-)Wert zugeordneten Wahrscheinlichkeiten in der ersten und weiteren Wahrscheinlichkeitsverteilung ermittelt wird.

Der Plausibilitätswert kann dann der Quotient aus der Wahrscheinlichkeit für ein Übereinstimmen und der Wahrscheinlichkeit für ein Nicht-Übereinstimmen der Merkmale sein, wobei sich die Wahrscheinlichkeit für ein Übereinstimmen aus der ersten Wahrscheinlichkeitsverteilung und die Wahrscheinlichkeit für ein Nicht-Übereinstimmen aus der weiteren Wahrscheinlichkeitsverteilung ergibt. Somit kann jedem Ähnlichkeitswert ein Plausibilitätswert zugeordnet werden. Durch den Plausibilitätswert werden die beiden einem Ähnlichkeitswert zugeordneten Wahrscheinlichkeiten relativiert. Zur Bestimmung des Ähnlichkeitsmaßes kann dann für jeden bestimmten Ähnlichkeitswert ein Plausibilitätswert bestimmt werden.

Sind die Wahrscheinlichkeiten für einen ersten Ähnlichkeitswert von 5 wie im vorherigen Beispiel mit 80% für ein Übereinstimmen und 20% für ein Nicht-Übereinstimmen zugeordnet worden, so ergibt sich der erste Plausibilitätswert z.B. zu 8/2. Sind die Wahrscheinlichkeiten für einen zweiten Ähnlichkeitswert von 3 mit 40% für ein Übereinstimmen und 60% für ein Nicht-Übereinstimmen zugeordnet worden, so ergibt sich der zweite Plausibilitätswert zu 2/3. Selbstverständlich können auch die Kehrwerte der gerade beschriebenen Quotienten als Plausibilitätswerte genutzt werden.

Bei der Bestimmung des Ähnlichkeitsmaßes können dann alle Plausibilitätswerte miteinander multipliziert oder ihr Mittelwert gebildet werden, die wie vorhergehend erläutert für jeden Ähnlichkeitswert, der beim Abgleich zwischen dem zu prüfenden Abbild und jedem Abbild der Referenzbildmenge bestimmt wird, bestimmt werden. Dieses Produkt bzw. der Mittelwert bildet einen Gesamtplausibilitätswert. Dann kann das Ähnlichkeitsmaß als der Ähnlichkeitswert bestimmt werden, dem der Gesamtplausibilitätswert zugeordnet ist, insbesondere in Abhängigkeit der vorhergehend erläuterten Zuordnung von Plausibilitätswerten zu Ähnlichkeitswerten.

So kann das Ähnlichkeitsmaß mit erhöhter Genauigkeit und Zuverlässigkeit bestimmt werden, da durch das beschriebene Relativieren der Wahrscheinlichkeitswerte eine Gewichtung bei der Bestimmung von Ähnlichkeitswerten erfolgt und Ausreißer weniger stark Einfluss auf das Ähnlichkeitsmaß nehmen.

In einer weiteren Ausführungsform wird eine Zuverlässigkeitsgröße bestimmt, wobei diese Größe eine Wahrscheinlichkeit der Richtigkeit des Ergebnisses angibt. Insbesondere wenn die zu verifizierende Person als Referenzperson identifiziert wurde (also das Ähnlichkeitsmaß das Kriterium erfüllt), kann die Zuverlässigkeitsgröße angeben, mit welcher Wahrscheinlichkeit die als Referenzperson identifizierte Person tatsächlich nicht der Referenzperson entspricht und somit einer Falschakzeptanzrate (false match rate) entsprechen. Wenn die zu verifizierende Person als nicht der Referenzperson entsprechende Person identifiziert wurde (also das Ähnlichkeitsmaß das Kriterium nicht erfüllt), kann die Zuverlässigkeitsgröße angeben, mit welcher Wahrscheinlichkeit die nicht als Referenzperson identifizierte Person tatsächlich doch der Referenzperson entspricht und somit einer Falschnichtakzeptanzrate (false non match rate) entsprechen.

Hierzu kann aus den bestimmten Wahrscheinlichkeitsverteilungen für jeden Schwellwert (Ähnlichkeits-Schwellwert) die schwellwertspezifische Falschakzeptanzrate und die schwellwertspezifische Falschnichtakzeptanzrate bestimmt werden, wobei dieser Zusammenhang z.B. in Form einer ROC-Kurve (Receiver-Operating Characteristic-Kurve) dargestellt sein kann. Dieser Zusammenhang kann dann zur Bestimmung der Zuverlässigkeitsgröße ausgewertet werden. Das Erstellen einer Receiver Operating Characteristic Kurve ist dem Fachmann hierbei bekannt. In Abhängigkeit dieses Zusammenhangs kann auch - wie vorhergehend erläutert - die Größe zur Auswertung des Kriteriums bestimmt werden, insbesondere als der Schwellwert, bei dem die Falschakzeptanzrate kleiner als oder gleich einem vorbestimmten Schwellwert, z.B. 0.001, ist.

Es ist weiter vorstellbar, dass die Zuverlässigkeitsgröße sowie das Ergebnis der Verifikation über eine Ausgabeeinrichtung, insbesondere einem Benutzer eines Systems zur Personenverifikation, ausgegeben werden. Hierdurch kann dem Benutzer vermittelt werden, wie richtig das mit dem vorgeschlagenen Verfahren bestimmte Ergebnis ist.

Insbesondere kann die Zuverlässigkeitsgröße auch mit einem vorbestimmten Schwellwert abgeglichen werden, wobei eine Zuverlässigkeitsgröße, die kleiner als der Schwellwert ist, eine besonders zuverlässige Richtigkeit des Ergebnisses angibt.

Durch Bestimmen einer Zuverlässigkeitsgröße wird das Verifikationsergebnis in vorteilhafter Weise durch eine Wahrscheinlichkeit quantifiziert. So kann die Ähnlichkeit zwischen einer zu verifizierenden Person und der Referenzperson schnell und objektiv beurteilt werden.

In einer weiteren Ausführungsform wird das Verfahren des maschinellen Lernens wie folgt trainiert
- Bereitstellen einer ersten Trainingsbildmenge mit Porträtfotografien, also Fotografien von Gesichtern, wobei jedem Abbild mindestens eine fotospezifische Grundwahrheit zugeordnet ist,
- Vortainieren eines neuronalen Netzes mit der ersten Trainingsbildmenge,
- Bereitstellen einer weiteren Trainingsbildmenge mit Abbildern aus Porträtgemälden, wobei jedem Abbild mindestens eine gemäldespezifische Grundwahrheit zugeordnet ist,
- Spezialisieren des vortrainierten neuronalen Netzes mit der weiteren Trainingsbildmenge,
- wobei das derart trainierte Verfahren des maschinellen Lernens dazu ausgebildet ist, für Abbilder von Porträtgemälden abbildspezifische Merkmale zu bestimmen.

Ein untrainiertes Verfahren des maschinellen Lernens muss erlernen, für ein Abbild eines Porträtgemäldes mindestens ein abbildspezifisches Merkmal mit einer Güte zu bestimmen, die eine Durchführung des eingangs beschriebenen Personenverifikationsverfahrens mit hinreichender Genauigkeit ermöglicht. Hierzu kann ein noch nicht trainiertes neuronales Netz durch Trainieren mit einer ersten und einer weiten Trainingsbildmenge angepasst werden. Ein neuronales Netz kann mehrere Ebenen umfassen, wobei in jeder Ebene eine Vielzahl von Neuronen angeordnet sein kann, wobei die Anordnung sowie Verknüpfungen zwischen den verschiedenen Ebenen durch das Trainieren anpassbar sind. Ein dazu geeignetes neuronales Netz kann beispielsweise ein Residual Neural Network sein.

Für das Trainieren wird eine erste Trainingsbildmenge mit Porträtfotografien bereitgestellt, die Abbilder der ersten Trainingsbildmenge bilden. Liegen Porträtfotografien als digitale Bilddateien vor, so können die Abbilder durch diese bzw. in Form dieser Bilddateien bereitgestellt sein. Selbstverständlich ist es auch möglich, die Abbilder der ersten Trainingsbildmenge durch eine Abbildung, z.B. mit einer Bilderfassungseinrichtung, von Porträtfotografien zu erzeugen. Diese erste Trainingsbildmenge umfasst vorzugweise eine ausreichend hohe Anzahl von Abbildern, wie beispielsweise 10.000 oder mehr Abbilder, insbesondere bis zu 1.000.000 Abbilder. Die Abbilder der ersten Trainingsbildmenge sind Fotografien von Personen oder von Gesichtern, insbesondere Porträtfotografien. Die erste Trainingsbildmenge umfasst vorzugsweise sowohl Abbilder von männlichen Personen als auch von weiblichen Personen. Auch bilden die Abbilder vorzugsweise Personen mit unterschiedlichen Phänotypen ab, insbesondere also Personen mit unterschiedlichen visuellen Erscheinungsbildern. Vorzugsweise gibt es von jeder Person mindestens zwei Abbilder, wobei die mindestens zwei Abbilder die Person vorzugweise aus unterschiedlichen Blickwinkeln abbilden. Jedem Abbild ist hierbei mindestens eine fotospezifische Grundwahrheit zugeordnet. Insbesondere entspricht die Grundwahrheit der Identität einer in einem Abbild abgebildeten Person. Die hohe Anzahl von Abbildern von Fotografien kann beispielsweise durch Abrufen aus einer Datenbank schnell und kostengünstig bereitgestellt werden. In einer Porträtfotografie und in einem Porträtgemälde ist vorzugsweise mindestens das vollständige Gesicht einer Person abgebildet.

Auch ist vorstellbar, dass zumindest ein Teil der Abbilder der ersten Trainingsbildmenge erzeugt wird, indem Eigenschaften von Abbildern, die bereits Teil der ersten Trainingsbildmenge sind, verändert werden, beispielsweise durch dem Fachmann bekannte Verfahren der Bildbearbeitung. Eine solche Veränderung kann z.B. durch eine Änderung der Orientierung oder eine Spiegelung oder durch eine Änderung einer Kontraststärke eines Abbilds erfolgen. Alternativ oder kumulativ ist vorstellbar, dass zumindest ein Teil der Abbilder oder alle Abbilder der ersten Trainingsbildmenge bereitgestellt wird/werden, indem Eigenschaften von Porträtfotografien so verändert werden, dass diese Abbilder von Porträtgemälden simulieren. Beispielsweise können durch dem Fachmann bekannte Verfahren der Bildbearbeitung Porträtfotografien oder Abbilder von Porträtfotografien derart verändert werden, dass diese Abbilder in ihrem Aussehen Porträtgemälden nachempfunden sind, die Abbilder Porträtgemälde also simulieren. Dies kann als Data Augmentation der ersten Trainingsbildmenge bezeichnet werden.

Das neuronale Netz wird dann vortrainiert, indem die Abbilder der ersten Trainingsbildmenge mittels des neuronalen Netzes analysiert werden und das neuronale Netz in Abhängigkeit des Ergebnisses der Analyse, also insbesondere in Abhängigkeit mindestens eines mit dem neuronalen Netz bestimmten abbildspezifischen Merkmals, angepasst wird. Eine solche Anpassung des neuronalen Netzes kann insbesondere durch eine iterative Annäherung an ein Optimierungskriterium erfolgen. Eine Analyse eines Abbilds durch das neuronale Netz kann beispielsweise bezeichnen, dass die einzelnen Bildpunkte, insbesondere deren Intensitätswerte, eines als Bilddatei kodierten Abbilds mittels des neuronalen Netzes analysiert werden. So kann das neuronale Netz insbesondere aus den Unterschieden, insbesondere von Intensitäten, zwischen Bildpunkten Kanten-, Kurven- und/oder Farbverläufe in einem Abbild detektieren. Dabei ist mindestens ein Abbild eine Eingangsgröße und mindestens ein durch die Analyse bestimmtes Merkmal eine Ausgangsgröße des neuronalen Netzes.

Um das neuronale Netz anzupassen, wird in einem ersten Durchlauf des Trainings eine erste Untermenge von beispielsweise drei Abbildern (z.B. Abbild A, Abbild B und Abbild C) der ersten Trainingsbildmenge analysiert, wobei zwei Abbildern A, B als Grundwahrheit die Identität derselben Person zugeordnet ist, also zwei der Abbilder A, B dieselbe Person abbilden. Dem verbleibenden Abbild C ist die Identität einer anderen Person als Grundwahrheit zugeordnet, so dass dieses Abbild C also eine andere Person als die Abbilder A und B abbildet. Nach der Analyse der drei Abbilder hat das neuronale Netz drei abbildspezifische Merkmale/Merkmalsvektoren erzeugt, die nach dem ersten Durchlauf des Trainings üblicherweise keine hohe Güte bezüglich möglicher Rückschlüsse auf die abgebildeten Personen bzw. die Grundwahrheiten aufweisen. Eine Anpassung/Training des neuronalen Netzes kann nun derart durchgeführt werden, dass eine merkmalsabhängige Auswertegrößen minimiert oder maximiert werden oder soweit reduziert werden, dass die Auswertegröße einem vorbestimmten Schwellwert entspricht oder kleiner als dieser vorbestimmte Schwellwert ist, oder soweit erhöht werden, dass die Auswertegröße einem (weiteren) vorbestimmten Schwellwert entspricht oder größer als dieser (weitere) vorbestimmte Schwellwert ist. Mit anderen Worten kann durch das Training eine auswertegrößenabhängige Kostenfunktion minimiert oder maximiert werden, insbesondere bis zu einem vorbestimmten Maß. Eine Auswertegröße kann eine Differenz zwischen zwei durch die Analyse bestimmten Merkmalen/Merkmalsvektoren sein. Ein Schwellwert kann beispielsweise eine vorbestimmte Differenz zwischen den zwei Merkmalen/Merkmalsvektoren für die Abbilder, die dieselbe Person abbilden, sein, wobei die Auswertegröße mittels iterativer Anpassungen, also Training, des neuronalen Netzes minimiert wird oder soweit minimiert wird, dass sie kleiner als die vorbestimmte Differenz ist. Ein weiterer Schwellwert kann eine vorbestimmte weitere Differenz zwischen den zwei Merkmalen/Merkmalsvektoren sein, die für die Abbilder bestimmt worden sind, die verschiedene Personen abbilden. Mittels der iterativen Anpassungen des neuronalen Netzes kann die Auswertegröße maximiert werden oder soweit maximiert werden, dass sie größer als die vorbestimmte weitere Differenz ist. Dieses Vorgehen kann als Annäherung an ein Optimierungskriterium bezeichnet werden.

In weiteren Durchläufen wird das beschriebene Vorgehen für weitere, von der ersten und voneinander verschiedenen, Untermengen der ersten Trainingsbildmenge ebenfalls durchgeführt, so dass das neuronale Netz für das Bestimmen von Merkmalen aus Abbildern insbesondere verschiedener Personen optimiert wird. Für das erläuterte Training, insbesondere als Kostenfunktion, kann beispielsweise eine Triplet-Loss-Funktion genutzt werden. Die Nutzung einer solchen Funktion ist dem Fachmann hierbei bekannt.

Auch kann eine Teilmenge der ersten Trainingsbildmenge nicht für das Training genutzt werden, sondern die Abbilder der Teilmenge können für die Beurteilung einer Güte des neuronalen Netzes zurückgehalten werden. Um die Güte des vortrainierten neuronalen Netzes zu beurteilen, werden nach dem Vortrainieren beispielsweise die zurückgehaltenen Abbilder ohne die fotospezifische Grundwahrheit durch das vortrainierte neuronale Netz analysiert und die den Abbildern zugeordneten Grundwahrheiten genutzt, um zu überprüfen, ob die so bestimmten Merkmale ermöglichen, Rückschlüsse auf die in den Abbildern abgebildeten Personen zu ziehen bzw. bestimmte Merkmale für Abbilder derselben Person nicht mehr als ein vorbestimmtes Maß voneinander abweichen und/oder bestimmte Merkmale für Abbilder verschiedener Personen mehr als ein vorbestimmtes Maß voneinander abweichen. Um Rückschlüsse auf die in den Abbildern abgebildeten Personen zu ziehen, kann beispielsweise eine Differenz zwischen den Merkmalen solcher Bildpaare, die nicht dieselbe Person abbilden, bestimmt werden. Die Identitäten der abgebildeten Personen sind dabei aus den zugeordneten Grundwahrheiten bekannt. Weiter kann die Güte ausreichend sein, wenn mit Hilfe der bestimmten Differenz ermittelt wird, dass das vorbestimmte Maß überschritten wird. Als vorbestimmtes Maß kann beispielsweise ein Mindestwert für die Differenz zwischen zwei Merkmalen von Abbildern, die nicht dieselbe Person abbilden, festgelegt werden.

Um das vortrainierte neuronale Netz für das Analysieren von Abbildern aus Porträtgemälden zu spezialisieren, wird eine weitere Trainingsbildmenge bereitgestellt. Ein solches Spezialisieren eines vortrainierten neuronalen Netzes wird auch als Transfer Learning bezeichnet. Die weitere Trainingsbildmenge umfasst Abbilder von verschiedenen Porträtgemälden, vorzugweise 300 oder mehr Abbilder, wobei jedem Abbild mindestens eine gemäldespezifische Grundwahrheit zugeordnet ist. Eine solche gemäldespezifische Grundwahrheit kann insbesondere die Identität einer abgebildeten Person betreffen bzw. sein. Durch das Vortrainieren des neuronalen Netzes ist ermöglicht, dass die weitere Trainingsbildmenge eine geringere Anzahl von Abbildern umfassen kann als die erste Trainingsbildmenge. Dies ist insbesondere deswegen vorteilhaft, weil Abbilder von Porträtgemälden üblicher Weise in nicht so hoher Anzahl vorhanden sind wie es Fotografien sind. Die erste und die weitere Trainingsbildmenge umfassen vorzugsweise mindestens zwei Abbilder pro Identität, also mindestens zwei Abbilder derselben Person.

Auch vorstellbar ist, dass zumindest ein Teil der Abbilder oder alle Abbilder der weiteren Trainingsbildmenge bereitgestellt wird, indem Eigenschaften von Porträtfotografien, insbesondere von Porträtfotografien der ersten Trainingsbildmenge oder Porträtfotografien, die nicht Teil der ersten Trainingsbildmenge sind, so verändert werden, dass diese Abbilder von Porträtgemälden simulieren. Beispielsweise können durch dem Fachmann bekannte Verfahren der Bildbearbeitung Porträtfotografien oder Abbilder von Porträtfotografien derart verändert werden, dass diese Abbilder in ihrem Aussehen Porträtgemälden nachempfunden sind, die Abbilder Porträtgemälde also simulieren. Es können aber auch andere Eigenschaften der Abbilder verändert werden, wie beispielsweise eine Kontraststärke oder eine Orientierung der Abbilder. Auch dieses Vorgehen kann als Data Augmentation bezeichnet werden. So lässt sich auf einfache Weise insbesondere die Anzahl an Abbildern der ersten und weiteren Trainingsbildmenge erhöhen.

Für das Spezialisieren des vortrainierten neuronalen Netzes wird dann, vorzugsweise analog zum beschriebenen Vorgehen des Vortrainierens, mittels der weiteren Trainingsbildmenge das vortrainierte neuronale Netz derart angepasst/trainiert, dass Merkmale für Abbilder von Porträtgemälden derselben Person nicht mehr als ein vorbestimmtes Maß voneinander abweichen und/oder für Abbilder von Porträtgemälden verschiedener Personen mehr als ein vorbestimmtes Maß voneinander abweichen. Insbesondere kann also das weitere Training des neuronalen Netzes nun derart durchgeführt werden, dass merkmalsabhängige Auswertegrößen minimiert oder maximiert werden oder soweit reduziert werden, dass die Auswertegröße einem vorbestimmten Schwellwert entspricht oder kleiner als dieser vorbestimmte Schwellwert ist, oder soweit erhöht werden, dass die Auswertegröße einem (weiteren) vorbestimmten Schwellwert entspricht oder größer als dieser (weitere) vorbestimmte Schwellwert ist. Mit anderen Worten kann durch das Training eine auswertegrößenabhängige Kostenfunktion minimiert oder maximiert werden, insbesondere bis zu einem vorbestimmten Maß. Dieses Vorgehen kann ebenfalls als Annäherung an ein Optimierungskriterium bezeichnet werden.

Es ist selbstverständlich auch denkbar, dass eine Teilmenge der weiteren Trainingsbildmenge, beispielsweise 30 Abbilder der 300 Abbilder, beim Spezialisieren des vortrainierten Netzes nicht genutzt werden und diese Abbilder dann analog zur oben erwähnten Vorgehensweise zur Beurteilung der Güte des spezialisierten neuronalen Netzes genutzt werden.

Durch das beschriebene Trainieren des Verfahrens des maschinellen Lernens wird in vorteilhafter Weise erreicht, dass auch für Abbilder aus Porträtgemälden, denen keine Grundwahrheit zugeordnet ist, für die zuverlässige Verifikation geeignete Merkmale bestimmt werden können. Das trainierte Verfahren des maschinellen Lernens nutzt insbesondere das spezialisierte neuronale Netz.

Natürlich ist es auch denkbar, dass das Verfahren des maschinellen Lernens nur mit der ersten Trainingsbildmenge trainiert wird. Hierzu kann - wie vorhergehend erläutert - ein Bereitstellen einer ersten Trainingsbildmenge mit Porträtfotografien erfolgen, wobei jedem Abbild mindestens eine fotospezifische Grundwahrheit zugeordnet ist. Weiter erfolgt, wie ebenfalls vorhergehend erläutert, ein Trainieren eines neuronalen Netzes mit der ersten Trainingsbildmenge, wobei das derart trainierte Verfahren des maschinellen Lernens dazu ausgebildet ist, für Abbilder von Porträtgemälden abbildspezifische Merkmale zu bestimmen. Insbesondere erfolgt also kein Spezialisieren des vortrainierten neuronalen Netzes mit einer weiteren Trainingsbildmenge. In diesem Fall kann die erste Trainingsbildmenge Porträtfotografien und/oder entsprechend den vorhergehenden Erläuterungen simulierte Porträtgemälde und/oder Abbilder von Porträtgemälden umfassen. Es ist insbesondere vorstellbar, dass die erste Trainingsbildmenge in diesem Fall ausschließlich simulierte Porträtgemälde oder ausschließlich Abbilder von Porträtgemälden oder ausschließlich simulierte Porträtgemälde und Abbilder von Porträtgemälden umfasst.

Mittels des trainierten Verfahrens des maschinellen Lernens kann für ein Abbild eines Porträtgemäldes wie erläutert mindestens ein abbildspezifisches Merkmal bestimmt werden. Ein solches abbildspezifisches Merkmal kann dann wie oben beschrieben für ein Verfahren zur Personenverifikation in Porträtgemälden genutzt werden.

Mit anderen Worten stellt das hier beschriebene Trainieren des Verfahrens des maschinellen Lernens sicher, dass die Personenverifikation in Porträtgemälden mit ausreichender Güte bzw. Genauigkeit und Zuverlässigkeit ermöglicht ist.

Das trainierte neuronale Netz kann, wie eingangs erwähnt, mehrere, insbesondere hintereinander geschaltete, Ebenen umfassen, wobei Zwischenergebnisse bei der Analyse eines Abbilds mit fortschreitender Ebene abstrakter werden. Das Ergebnis der Analyse bzw. die Ausgangsgröße ist dann mindestens ein abbildspezifisches Merkmal. Durch die beschriebene Abstraktion während der Analyse eines Abbilds können die so bestimmten Merkmale sich auch auf solche Eigenschaften eines abgebildeten Gesichts beziehen, die dem subjektiven menschlichen Blick verborgen bleiben. So ergeben sich in vorteilhafter Weise differenziertere Merkmale gegenüber einer Analyse eines Abbilds durch einen Menschen, die eine Zuverlässigkeit und Genauigkeit bei der Personenverifikation in Porträtgemälden erhöhen.

Weiter vorgeschlagen wird ein System zur Personenverifikation, welches eine Bilderfassungseinrichtung und/oder eine Schnittstelle, eine Speichereinrichtung, eine Datenverarbeitungseinrichtung sowie eine Ausgabeeinrichtung umfasst, wobei das System dazu ausgebildet bzw. derart konfiguriert ist, ein Verfahren nach einer der zuvor offenbarten Ausführungsformen auszuführen.

Vorzugsweise ist das System als ein tragbares Endgerät, z.B. als ein Mobiltelefon, ausgebildet oder wird von dem Endgerät bzw. den Elementen des Endgeräts bereitgestellt. Die Ausführungsbeispiele für eine entsprechende Bilderfassungseinrichtung, Schnittstelle bzw. Speichereinrichtung wurden zuvor bereits erläutert. Die Datenverarbeitungseinrichtung kann als eine integrierte Schaltung auf einem Mikrochip ausgebildet sein oder einen solchen umfassen. Auch kann die Datenverarbeitungseinrichtung ein Mikrocontroller sein oder einen solchen umfassen. Insbesondere ist die Datenverarbeitungseinrichtung dazu ausgebildet, Abbilder von Porträtgemälden bzw. Bilddateien mit Hilfe des Verfahrens des maschinellen Lernens zu analysieren und das beanspruchte Personenverifikationsverfahren nach einer in dieser Offenbarung beschriebenen Ausführungsform durchzuführen. Eine Ausgabeeinrichtung kann beispielsweise als ein Display ausgebildet sein und dazu genutzt werden, insbesondere eine Ergebnis- bzw. eine Zuverlässigkeitsgröße der Personenverifikation an einen Benutzer auszugeben.

Weiter wird ein Computerprogrammprodukt mit einem Computerprogramm vorgeschlagen, wobei das Computerprogramm Softwaremittel zur Ausführung eines, mehrerer oder aller Schritte des Verfahrens zur Personenverifikation in Porträtgemälden gemäß einer der in dieser Offenbarung beschriebenen Ausführungsformen umfasst, wenn das Computerprogramm von oder in einem Computer oder einem Automatisierungssystem ausgeführt wird.

Ferner wird ein Programm beschrieben, das, wenn es auf einem Computer oder in einem Automatisierungssystem abläuft, den Computer oder das Automatisierungssystem veranlasst, einen oder mehrere oder alle Schritte des Verfahrens zur Personenverifikation in Porträtgemälden gemäß einer der in dieser Offenbarung beschriebenen Ausführungsformen durchzuführen, und/oder ein Programmspeichermedium, auf dem das Programm gespeichert ist (insbesondere in einer nicht-transitorischen Form), und/oder zu einem Computer, der das Programmspeichermedium umfasst, und/oder eine (physikalischen, z.B. elektrische, z.B. technisch erzeugte) Signalwelle, z.B. eine digitale Signalwelle, die Informationen trägt, die das Programm, z.B. das vorgenannte Programm, darstellen, das z.B. Codemittel umfasst, die geeignet sind, einen oder alle der hierin beschriebenen Verfahrensschritte durchzuführen.

Dies bedeutet, dass das erfindungsgemäße Verfahren zum Beispiel ein computerimplementiertes Verfahren ist. Beispielsweise können alle Schritte oder nur einige der Schritte (d.h. weniger als die Gesamtzahl der Schritte) des erfindungsgemäßen Verfahrens von einem Computer ausgeführt werden. Eine Ausführungsform des computerimplementierten Verfahrens ist eine Verwendung des Computers zur Durchführung eines Datenverarbeitungsverfahrens. Der Computer umfasst zum Beispiel mindestens einen Mikrocontroller oder Prozessor und zum Beispiel mindestens einen Speicher, um die Daten (technisch) zu verarbeiten, zum Beispiel elektronisch und/oder optisch. Der Prozessor besteht beispielsweise aus einer Substanz oder Zusammensetzung, die ein Halbleiter ist, beispielsweise zumindest teilweise n- und/oder p-dotierter Halbleiter, beispielsweise mindestens ein II-, III-, IV-, V-, VI-Halbleitermaterial, beispielsweise (dotiertes) Silizium und/oder Galliumarsenid. Die beschriebenen Schritte, insbesondere die Bestimmungsschritte und der Verifikationsschritt, werden beispielsweise von einem Computer durchgeführt. Bestimmungsschritte oder Berechnungsschritte sind beispielsweise Schritte zur Bestimmung von Daten im Rahmen des technischen Verfahrens, beispielsweise im Rahmen eines Programms. Ein Computer ist z.B. jede Art von Datenverarbeitungsgerät, z.B. elektronisches Datenverarbeitungsgerät. Ein Computer kann ein Gerät sein, das allgemein als solches angesehen wird, z. B. Desktop-PCs, Notebooks, Netbooks usw., kann aber auch ein beliebiges programmierbares Gerät sein, wie z. B. ein Mobiltelefon oder ein eingebetteter Prozessor. Ein Computer kann beispielsweise aus einem System (Netzwerk) von "Sub-Computern" bestehen, wobei jeder Sub-Computer einen eigenständigen Computer darstellt. Schritte, die von einem Computer oder einem Automatisierungssystem ausgeführt oder durchgeführt werden, können insbesondere die Bestimmungsschritte und/oder der Verifikationsschritt sein. Das Computerprogrammprodukt ermöglicht in vorteilhafter Weise die Durchführung eines Verfahrens zur Personenverifikation in Porträtgemälden gemäß einer der in dieser Offenbarung beschriebenen Ausführungsformen, für die zuvor technische Vorteile beschrieben worden sind.

Die Erfindung wird anhand von Ausführungsbeispielen näher erläutert. Die Figuren zeigen:
- Fig. 1: eine Referenzbildmenge, eine Konträrbildmenge und ein zu prüfendes Abbild,
- Fig. 2: ein Flussdiagramm einer erfindungsgemäßen Ausführungsform eines Verfahrens zur Personenverifikation in Porträtgemälden,
- Fig. 3: ein Flussdiagramm für das Trainieren eines Verfahrens des maschinellen Lernens,
- Fig. 4: eine erfindungsgemäße Ausführungsform eines Systems zur Personenverifikation in einem Porträtgemälde, und
- Fig. 5: eine erste und weitere Verteilung.

Nachfolgend bezeichnen gleiche Bezugszeichen Elemente mit gleichen oder ähnlichen technischen Merkmalen.

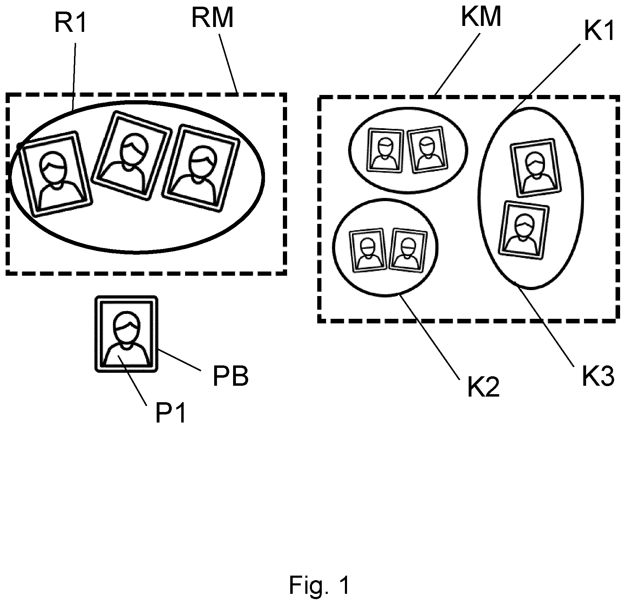

Fig. 1 zeigt die Referenzbildmenge RM mit drei voneinander verschiedenen Abbildern der Referenzperson R1. Die Abbilder können dabei Porträtgemälde der Referenzperson R1 abbilden, die von unterschiedlichen Malern und/oder zu unterschiedlichen Zeitpunkten im Leben der Referenzperson R1 angefertigt worden sind. Wesentlich ist, dass für alle Abbilder der Referenzbildmenge RM vorbekannt ist, dass diese die Referenzperson R1 abbilden.

Weiter ist in Fig. 1 die Konträrbildmenge KM gezeigt. Die Konträrbildmenge KM umfasst insgesamt sechs Abbilder, wobei zwei Abbilder verschiedene Porträtgemälde einer ersten Konträrperson K1 abbilden, zwei Abbilder verschiedene Porträtgemälde einer zweiten Konträrperson K2 abbilden und zwei Abbilder verschiedene Porträtgemälde einer dritten Konträrperson K3 abbilden. Jedes Abbild der Konträrbildmenge KM bildet ein Porträtgemälde einer historisch relevanten Person K1, K2, K3 ab, deren Identität ebenfalls vorbekannt ist. Die Konträrpersonen K1, K2, K3 sind voneinander verschieden, beziehen sich also auf unterschiedliche Personen. Zudem sind alle Konträrpersonen K1, K2, K3 von der Referenzperson R1 verschieden.

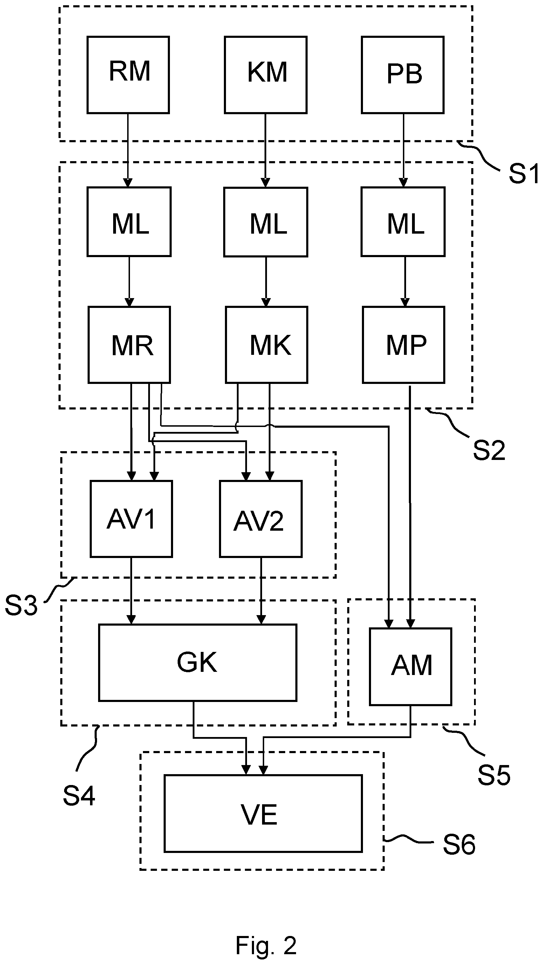

Weiter ist in Fig. 1 ein zu prüfendes Abbild PB eines Porträtgemäldes einer zu verifizierenden Person P1 gezeigt. Die Abbilder der Referenzbildmenge RM wurden hierbei so ausgewählt, dass mittels des Personenverifikationsverfahrens (siehe Fig. 2) verifiziert werden kann, ob die in dem zu prüfenden Abbild PB gezeigte Person P1 der Referenzperson R1 entspricht.

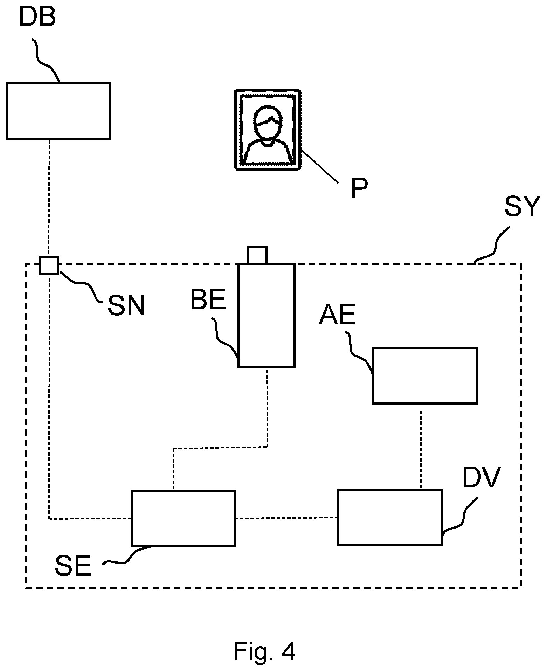

In Fig. 2 ist ein schematisches Flussdiagramm eines erfindungsgemäßen Verfahrens zur Personenverifikation in Porträtgemälden gezeigt. Das Verfahren umfasst sechs Schritte S1 bis S6, die im Folgenden erläutert werden. In Schritt S1 werden die in Fig. 1 gezeigten Abbilder bereitgestellt. Die Referenzbildmenge RM sowie die Konträrbildmenge KM können dabei durch Abrufen von als Bilddateien kodierten Abbildern aus einer Datenbank DB (siehe Fig. 4) bereitgestellt werden. Das zu prüfende Abbild PB kann durch Erfassen eines Porträtgemäldes P mittels einer Bilderfassungseinrichtung BE (siehe Fig. 4) bereitgestellt werden. Auch denkbar ist, dass das zu prüfende Abbild ebenfalls aus der Datenbank DB abgerufen wird. Die so bereitgestellten Abbilder können in einer Speichereinrichtung SE (siehe Fig. 4) zwischengespeichert werden.

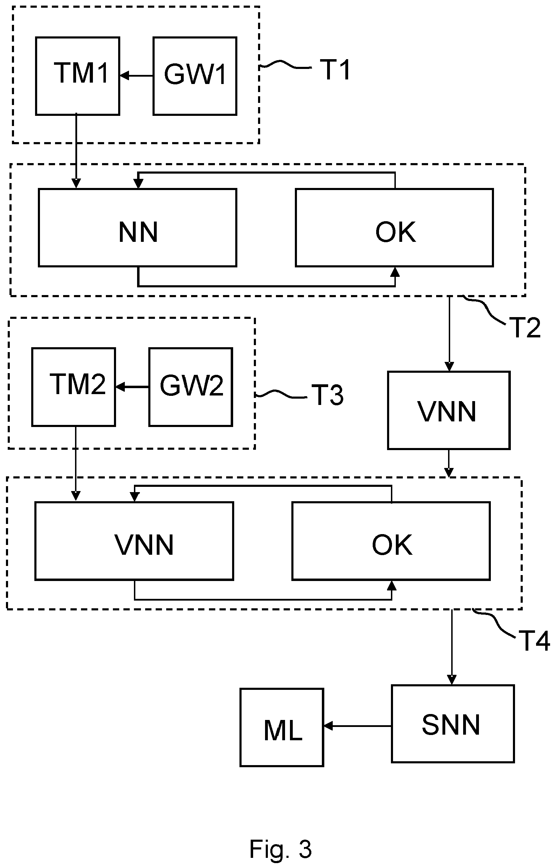

In Schritt S2 werden die Abbilder der Referenzbildmenge RM mittels einer Datenverarbeitungseinrichtung DV (siehe Fig. 4) einem Verfahren des maschinellen Lernens ML als Eingangsgröße zugeführt, wobei die Datenverarbeitungseinrichtung DV dieses Verfahren durchführt. Durch das Verfahren des maschinellen Lernens ML werden die Abbilder mit Hilfe eines spezialisierten neuronalen Netzes SNN (siehe Figur 3) analysiert, so dass für jedes Abbild mindestens ein abbildspezifisches Merkmal bestimmt wird und dieses dem jeweiligen Abbild als Ausgangsgröße des Verfahrens des maschinellen Lernens zugeordnet wird. So ergibt sich für die Abbilder der Referenzbildmenge RM eine Vielzahl von abbildspezifischen Merkmalen MR. Für die Abbilder der Konträrbildmenge KM sowie für das zu prüfende Abbild PB wird analog verfahren, sodass sich für die Abbilder der Konträrbildmenge KM eine Vielzahl von abbildspezifischen Merkmalen MK ergibt und für das zu prüfende Abbild PB mindestens ein Merkmal MP. Die Merkmale können als Vektoren bestimmt werden und in einem Vektorraum angeordnet sein.

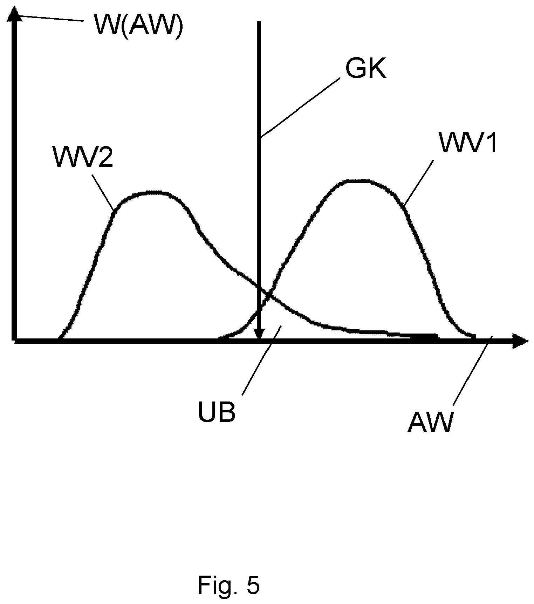

Aus den abbildspezifischen Merkmalen MR, die den Abbildern der Referenzbildmenge RM zugeordnet sind, und den Merkmalen MK, die den Abbildern der Konträrbildmenge zugeordnet sind, werden in Schritt S3 durch Abgleich der Merkmale von Abbildern jedes Bildpaares, dessen Abbilder dieselbe Person abbilden, Ähnlichkeitswerte AW zur Bestimmung einer ersten Verteilung ermittelt. Durch Abgleich der Merkmale von Abbildern jedes Bildpaares, dessen Abbilder verschiedenen Personen abbilden, werden Ähnlichkeitswerte zur Bestimmung einer weiteren Verteilung ermittelt. Ein Ähnlichkeitswertes AW wird insbesondere aus der Differenz zwischen zwei Merkmalen bzw. aus der euklidischen Distanz zwischen zwei Vektoren ermittelt. In diesem Fall repräsentiert eine sich verringernde Differenz eine sich erhöhende Ähnlichkeit. Die aus der ersten und weiteren Verteilung, z.B. mit einem Kerndichteschätzer, erzeugten Wahrscheinlichkeitsverteilungen WV1, WV2 sind schematisch in Fig. 5 gezeigt.

Die erste und weitere Wahrscheinlichkeitsverteilung WV1, WV2 geben für jeden bestimmten Ähnlichkeitswert AW der ersten bzw. weiteren Verteilung an, welche Wahrscheinlichkeit W für ein Übereinstimmen bzw. Nicht-Übereinstimmen diesem Ähnlichkeitswert AW zugeordnet ist (siehe Fig. 5).

In Schritt S4 wird eine Größe GK zur Auswertung eines Kriteriums bestimmt. Die Größe GK wird als ein Mittelwert der Ähnlichkeitswerte AW im Wertebereich eines Überscheidungsbereich UB der ersten und weiteren Ähnlichkeitsverteilung bestimmt (siehe Fig. 5). Die Größe GK ist folglich auch ein Ähnlichkeitswert. Auch kann - wie vorhergehend erläutert - die Größe GK als ein Ähnlichkeitswert AW bestimmt werden, für den eine vorbestimmte Falschakzeptranzrate nicht überschritten wird.

In Schritt S5 wird ein Ähnlichkeitsmaß AM aus einem Abgleich zwischen den Merkmalen MR, die den Abbildern der Referenzbildmenge RM zugeordnet sind, und dem Merkmal/den Merkmalen MP bestimmt, die dem zu prüfenden Abbild PB zugeordnet sind. So wird durch einen Abgleich des/der prüfbildspezifischen Merkmals/der Merkmale MP mit dem referenzbildspezifischen Merkmale/den referenzbildspezifischen Merkmalen jedes Referenzbildes RB jeweils ein Ähnlichkeitswert AW bestimmt. Das Ähnlichkeitsmaß AM kann dann als ein Mittelwert der so bestimmten Ähnlichkeitswerte AW bestimmt werden. Auch denkbar ist, dass für jeden bestimmten Ähnlichkeitswert AW ein Plausibilitätswert bestimmt wird und das Ähnlichkeitsmaß AM dann als der Ähnlichkeitswert AW der ersten oder weiteren Verteilung bestimmt wird, dem das Produkt oder der Mittelwert der bestimmten Plausibilitätswerte als Plausibilitätswert zugeordnet ist.

In einem Schritt S6 wird dann das Ähnlichkeitsmaß AM mit der Größe GK zur Auswertung des Kriteriums verglichen. Das Kriterium zur Unterscheidung kann dann zur Verifikation der Person P1 genutzt werden, wobei die zu verifizierende Person P1 als mit der Referenzperson R1 übereinstimmende Person verifiziert wird, wenn das bestimmte Ähnlichkeitsmaß AM einen der Größe GK entsprechenden Schwellwert übersteigt. Ist das Ähnlichkeitsmaß kleiner als oder gleich der Größe, so wird die zu verifizierende Person P1 nicht als mit der Referenzperson R1 übereinstimmende Person verifiziert. Ein so bestimmtes Ergebnis der Verifikation VE kann dann über eine Ausgabeeinrichtung AE ausgegeben werden (siehe Fig. 4).

Fig. 3 zeigt ein Flussdiagramm für das Trainieren eines Verfahrens des maschinellen Lernens ML. In einem Trainingsschritt T1 wird eine erste Trainingsbildmenge TM1 bereitgestellt. Die erste Trainingsdatenmenge TM1 umfasst in der dargestellten Ausführungsform 10.000 bis 1.000.000 Porträtfotografien, also Fotografien von Personen bzw. deren Gesichtern. Die Identitäten der abgebildeten Personen sind den jeweiligen Abbildern als fotospezifische Grundwahrheit GW1 zugeordnet, die Identität der abgebildeten Personen ist also vorbekannt. Vorzugsweise gibt es in der ersten Trainingsdatenmenge TM1 von jeder Person zwei Abbilder.

In einem Trainingsschritt T2 wird ein neuronales Netz NN mittels der ersten Trainingsbildmenge TM1 vortrainiert. Dazu werden in einem ersten Durchlauf zwei Abbilder derselben Person und ein Abbild einer anderen Person durch das neuronale Netz NN analysiert. Dabei ist jedes Abbild eine Eingangsgröße und eine durch die Analyse bestimmte abbildspezifische Merkmalsmenge eine Ausgangsgröße des neuronalen Netzes NN, wobei die Merkmalsmenge genau ein oder mehr als ein Merkmal umfassen bzw. kodieren kann. Für die so bestimmten Merkmalsmengen wird eine erste Differenz zwischen den zwei Merkmalsmengen von Abbildern, die dieselbe Person repräsentieren sollen, bestimmt und eine weitere Differenz für die Merkmalsmengen von Abbildern, die unterschiedliche Personen repräsentieren sollen, bestimmt. Das neuronale Netz NN kann in einer Optimierung OK dann derart angepasst werden, dass die erste Differenz minimiert und/oder die weitere Differenz maximiert wird. Welche Person in welchem Abbild abgebildet ist, ist bei dieser Optimierung aufgrund der Grundwahrheit GW1 bekannt. Insbesondere kann das neuronale Netz NN bei der Optimierung OK durch eine Anpassung der Anordnung der Neuronen in einer Ebene des neuronalen Netzes NN oder durch Anpassung einer Verknüpfung zwischen den Ebenen des neuronalen Netzes NN angepasst werden. Zur Durchführung der Optimierung OK kann eine Triplet-Loss-Funktion genutzt werden. Die verbleibenden Abbilder der ersten Trainingsbildmenge TM1 können zur weiteren Optimierung OK des neuronalen Netzes NN genutzt werden. Ist eine entsprechende Güte bei der Merkmalsbestimmung durch das neuronale Netz NN erreicht, beispielsweise weil Merkmale für Abbilder von Porträtgemälden derselben Person nicht mehr als ein vorbestimmtes Maß voneinander abweichen und/oder Merkmale für Abbilder von Porträtgemälden verschiedener Personen mehr als ein vorbestimmtes Maß voneinander abweichen, so ist das Vortraining des neuronalen Netzes NN abgeschlossen.

Weiter wird in einem Trainingsschritt T3 eine weitere Trainingsbildmenge TM2 bereitgestellt. Die weitere Trainingsbildmenge TM2 umfasst beispielsweise 300 Abbilder von Porträtgemälden. Jedem Abbild ist mindestens eine gemäldespezifische Grundwahrheit GW2 zugeordnet, die insbesondere die Identität einer abgebildeten Person einem Abbild zuordnet.

Das Bereitstellen beider Trainingsbildmengen TM1, TM2 kann wie bereits für die anderen Bildmengen erläutert über eine Datenbank erfolgen.

Das vortrainierte neuronale Netz VNN wird dann mittels der weiteren Trainingsbildmenge TM2 in einem Trainingsschritt T4 auf das Bestimmen von Merkmalen in Abbildern von Porträtgemälden spezialisiert. Insbesondere wird das vortrainierte neuronale Netz VNN durch die Spezialisierung derart trainiert, dass Unterschiede in Abbildern, die beispielsweise in einem Malstil begründet sind, beim Bestimmen von abbildspezifischen Merkmalen zu berücksichtigt sind. Das Resultat eines solchen Trainings ist ein spezialisiertes neuronales Netz SNN, welches in einem Verfahren des maschinellen Lernens ML genutzt werden kann. Das Verfahren des maschinellen Lernens ML ist dann dazu ausgebildet, für Abbilder von Porträtgemälden abbildspezifische Merkmale MR, MK, MP derart zu bestimmen, dass Merkmale für Abbilder von Porträtgemälden derselben Person nicht mehr als ein vorbestimmtes Maß voneinander abweichen und/oder Merkmale für Abbilder von Porträtgemälden verschiedener Personen mehr als ein vorbestimmtes Maß voneinander abweichen.

Fig. 4 zeigt eine erfindungsgemäße Ausführungsform eines Systems SY zur Personenverifikation in einem Porträtgemälde P. Eine Datenbank DB kann systemfremd auf einem Server abgespeichert sein, auf welchen das System SY über eine Schnittstelle SN, beispielsweise mittels einer Internetverbindung, zugreifen kann. Wie in Fig. 2 beschrieben, werden eine Referenzbildmenge RM mit Abbildern einer Referenzperson R1 sowie eine Konträrbildmenge KM mit Abbildern mehrerer Konträrpersonen K1, K2, K3 aus der Datenbank abgerufen und über die Schnittstelle SN an eine z.B. als RAM ausgebildete Speichereinrichtung SE des Systems SY übertragen und somit bereitgestellt. Zudem wird mittels einer Bilderfassungseinrichtung BE ein Porträtgemälde P erfasst. Das Porträtgemälde P zeigt eine zu verifizierende Person P1. Das so erzeugte Abbild PB der Person P1 wird ebenfalls in der Speichereinrichtung SE zwischengespeichert und somit bereitgestellt.

Die als Mikrocontroller ausgebildete Datenverarbeitungseinrichtung DV dient nun zur Durchführung des erfindungsgemäßen Verfahrens wie es in Fig. 2 beschrieben ist.

Eine als Display ausgebildete Ausgabeeinrichtung AE kann insbesondere das Ergebnis VE einer Personenverifikation bezüglich des zu prüfenden Abbilds PB bzw. des Porträtgemäldes P ausgeben. Hierdurch kann es einem Benutzer in vorteilhafter Weise erleichtert sein, eine in einem Porträtgemälde P abgebildete Person P1 schnell und kostengünstig gegen eine Referenzperson R1 zu verifizieren.

Fig. 5 zeigt einen Wertebereich der für die erste und weitere Verteilung bestimmten Ähnlichkeitswerte AW sowie die daraus erzeugte erste und weitere Wahrscheinlichkeitsverteilung WV1, WV2. Dabei gibt die erste Wahrscheinlichkeitsverteilung WV1 an, mit welcher Wahrscheinlichkeit W ein bestimmter Ähnlichkeitswert AWeine Übereinstimmung angibt. Die weitere Wahrscheinlichkeitsverteilung WV2 gibt an, mit welcher Wahrscheinlichkeit W ein bestimmter Ähnlichkeitswert AW eine Nicht-Übereinstimmung angibt. Zu beachten ist, dass die Wahrscheinlichkeitsverteilungen WV1, WV2 insbesondere derart bestimmt sind, dass für alle Ähnlichkeitswerte AW die Wahrscheinlichkeit größer als Null ist. Die Ähnlichkeitswerte AW sind dabei auf der Abszisse des gezeigten Koordinatensystems eingetragen, während die Wahrscheinlichkeiten W in Abhängigkeit der Ähnlichkeitswerte AW auf der Ordinate eingetragen sind. Die erste und weitere Wahrscheinlichkeitsverteilung WV1, WV2 weisen einen Bereich UB auf, in welchem sich die Wahrscheinlichkeitsverteilung überschneiden, wobei dem Bereich UB ein Wertebereich von Ähnlichkeitswerten AW der ersten und der weiteren Verteilung zugeordnet ist. Der Mittelwert des Wertebereichs der Ähnlichkeitswerte AW im Überschneidungsbereich UB kann als Größe GK zur Auswertung des Kriteriums bestimmt werden.

### Bezugszeichenliste

- AE: Ausgabeeinrichtung
- AM: Ähnlichkeitsmaß
- AW: Ähnlichkeitswert
- BE: Bilderfassungseinrichtung
- DB: Datenbank
- DV: Datenverarbeitungseinrichtung
- GK: Größe zur Auswertung eines Kriteriums
- GW1: fotospezifische Grundwahrheit
- GW2: gemäldespezifische Grundwahrheit
- KM: Konträrbildmenge
- K1: Abbilder einer ersten Konträrperson
- K2: Abbilder einer weiteren Konträrperson
- K3: Abbilder einer weiteren Konträrperson
- ML: Verfahren des maschinellen Lernens
- MK: Merkmale der Abbilder der Konträrbildmenge
- MP: Merkmale des zu prüfenden Abbilds
- MR: Merkmale der Abbilder der Referenzbildmenge
- NN: Neuronales netz
- OK: Optimierungskriterium
- P: Porträtgemälde
- PB: zu prüfendes Abbild
- P1: zu verifizierende Person
- RM: Referenzbildmenge
- R1: Abbilder der Referenzperson
- SE: Speichereinrichtung
- SN: Schnittstelle
- SNN: spezialisiertes neuronales Netz
- SY: System zur Personenverifikation
- S1: Bereitstellen der Abbilder
- S2: Bestimmen der Merkmale
- S3: Bestimmen der Verteilungen
- S4: Bestimmen einer Größe zur Auswertung eines Kriteriums
- S5: Bestimmen eines Ähnlichkeitsmaßes
- S6: Ausgaben eines Verifikationsergebnisses
- TM1: erste Trainingsbildmenge
- TM2: weitere Trainingsbildmenge
- T1: Bereitstellen der ersten Trainingsbildmenge
- T2: Vortrainieren des neuronalen Netzes
- T3: Bereitstellen der weiteren Trainingsbildmenge
- T4: Spezialisieren des neuronalen Netzes
- UB: Überschneidungsbereich der ersten und weiteren Verteilung
- VE: Verifikationsergebnis
- VNN: vortrainiertes neuronales Netz
- W: Wahrscheinlichkeit
- WV1: erste Wahrscheinlichkeitsverteilung
- WV2: weitere Wahrscheinlichkeitsverteilung

## Patentansprüche

1. Verfahren zur Personenverifikation in Porträtgemälden, umfassend:
- Bereitstellen (S1) einer Referenzbildmenge (RM) mit Abbildern von mindestens zwei, insbesondere voneinander verschiedenen, Porträtgemälden, wobei die Porträtgemälde dieselbe Referenzperson (R1) abbilden,
- Bereitstellen (S1) einer Konträrbildmenge (KM) mit Abbildern von mindestens zwei weiteren Porträtgemälden, wobei die weiteren Porträtgemälde jeweils eine Konträrperson (K1, K2, K3) abbilden,
- Bereitstellen (S1) mindestens eines zu prüfenden Abbilds (PB) eines Porträtgemäldes, wobei das Porträtgemälde eine zu verifizierende Person (P1) abbildet,
- Bestimmen (S2) von abbildspezifischen Merkmalen (MR, MK, MP) mittels eines Verfahrens des maschinellen Lernens (ML), wobei jedem Abbild mindestens ein Merkmal zugeordnet wird,
- Bestimmen (S3) einer ersten Verteilung von Ähnlichkeiten mittels der Merkmale (MR, MK) solcher Abbilder aus der Referenz- und/oder Konträrbildmenge (RM, KM), die dieselbe Person abbilden,
- Bestimmen (S3) einer weiteren Verteilung von Ähnlichkeiten mittels der Merkmale (MR, MK) solcher Abbilder der Referenzbild- und/oder Konträrbildmenge (RM, KM), die unterschiedliche Personen abbilden,
- Bestimmen (S4) mindestens einer zur Auswertung eines Kriteriums notwendigen Größe (GK) zur Unterscheidung der Referenzperson (R1) von der oder den Konträrperson(en) (K1, K2, K3) in Abhängigkeit von der ersten und/oder weiteren Verteilung von Ähnlichkeiten,
- Bestimmen (S5) eines Ähnlichkeitsmaßes (AM) mittels der Merkmale (MP, MR) des zu prüfenden Abbilds (PB) und jedes Abbilds der Referenzbildmenge (RM),
- Verifizieren (S6), ob die zu verifizierende Person (P1) mit der Referenzperson (R1) identisch ist, wenn das Ähnlichkeitsmaß (AM) das Kriterium erfüllt.

2. Verfahren nach einem der vorangegangenen Ansprüche, **dadurch gekennzeichnet, dass** das Bereitstellen (S1) der Abbilder durch Einlesen über eine Schnittstelle (SN) oder aus einer Datenbank (DB) und/oder durch Erfassen der Porträtgemälde (P) mittels einer Bilderfassungseinrichtung (BE) erfolgt.

3. Verfahren nach einem der vorangegangenen Ansprüche, **dadurch gekennzeichnet, dass** die abbildspezifischen Merkmale (MR, MK, MP) als Vektoren in einem Vektorraum bestimmt werden, wobei die erste und/oder weitere Verteilung und/oder das Ähnlichkeitsmaß (AM) ausgehend von Unterschieden zwischen den Vektoren bestimmt wird/werden.

4. Verfahren nach einem der vorangegangenen Ansprüche, **dadurch gekennzeichnet, dass** als Größe (GK) zur Auswertung des Kriteriums ein Wert aus einem Wertebereich der ersten und/oder weiteren Verteilung bestimmt wird.

5. Verfahren nach einem der vorangegangenen Ansprüche, **dadurch gekennzeichnet, dass** aus der ersten Verteilung eine erste Wahrscheinlichkeitsverteilung (WV1) erzeugt wird und aus der weiteren Verteilung eine weitere Wahrscheinlichkeitsverteilung (WV2) erzeugt wird.

6. Verfahren nach Anspruch 5, **dadurch gekennzeichnet, dass** bei der Bestimmung des Ähnlichkeitsmaßes (AM) mindestens ein Plausibilitätswert bestimmt wird, wobei der Plausibilitätswert als ein Verhältnis zwischen den einem Ähnlichkeitswert (AW) zugeordneten Wahrscheinlichkeiten (W) in der ersten und weiteren Wahrscheinlichkeitsverteilung (WV1, WV2) ermittelt wird.

7. Verfahren nach einem der vorangegangenen Ansprüche, **dadurch gekennzeichnet, dass** eine Zuverlässigkeitsgröße bestimmt wird, wobei diese Größe eine Wahrscheinlichkeit (W) der Richtigkeit des Ergebnisses angibt.

8. Verfahren nach einem der vorangegangenen Ansprüche, wobei das Verfahren des maschinellen Lernens (ML) wie folgt trainiert wird,
- Bereitstellen (T1) einer ersten Trainingsbildmenge (TM1) mit Porträtfotografien, wobei jedem Abbild mindestens eine fotospezifische Grundwahrheit (GW1) zugeordnet ist,
- Vortainieren (T2) eines neuronalen Netzes (NN) mit der ersten Trainingsbildmenge (TM1),
- Bereitstellen (T3) einer weiteren Trainingsbildmenge (TM2) mit Abbildern von Porträtgemälden, wobei jedem Abbild mindestens eine gemäldespezifische Grundwahrheit (GW2) zugeordnet ist,
- Spezialisieren (T4) des vortrainierten neuronalen Netzes (VNN) mit der weiteren Trainingsbildmenge (TM2),
- wobei das derart trainierte Verfahren des maschinellen Lernens (ML) dazu ausgebildet ist, für Abbilder von Porträtgemälden abbildspezifische Merkmale (MR, MK, MP) zu bestimmen.

9. Ein System (SY) zur Personenverifikation umfassend eine Bilderfassungseinrichtung (BE) und/oder eine Schnittstelle (SN), eine Speichereinrichtung (SE), eine Datenverarbeitungseinrichtung (DV) sowie eine Ausgabeeinrichtung (AE), wobei das System (SY) dazu ausgebildet bzw. derart konfiguriert ist, ein Verfahren nach den Ansprüchen 1 bis 8 auszuführen.

10. Computerprogrammprodukt mit einem Computerprogramm, wobei das Computerprogramm Softwaremittel zur Ausführung eines, mehrerer oder aller Schritte des Verfahrens nach einem der Ansprüche 1 bis 8 umfasst, wenn das Computerprogramm von oder in einem Computer oder einem Automatisierungssystem ausgeführt wird.
